# EUROPEAN PATENT APPLICATION

(11) **EP 4 845 233 A2**
(43) Date of publication of application: **25.11.2026**
(21) Application number: 26210015.9
(22) Date of filing: 01.07.2022
(51) Int. Cl.: H04W 48/16

(54) **METHOD AND DEVICE FOR TRANSMITTING OR RECEIVING BEAM INFORMATION IN WIRELESS COMMUNICATION SYSTEM**

(30) Priority: 14.07.2021 KR 20210091981
(62) Document number(s) of the earlier application(s) in accordance with Art. 76 EPC: 22842348.9 / 4 373 002
(71) Applicant: LG Electronics Inc., Yeongdeungpo-gu Seoul 07336 (KR)
(72) Inventor: CHUNG, Jaehoon, 06772 Seoul (KR); KANG, Jiwon, 06772 Seoul (KR); GO, Seongwon, 06772 Seoul (KR); PARK, Haewook, 06772 Seoul (KR)
(74) Representative: Mooser, Sebastian Thomas

(57) **Abstract**

The present specification proposes a method and a device for transmitting or receiving beam information in a wireless communication system. The method performed by a terminal comprises the steps of: receiving configuration information of the beam information from a base station; receiving at least one reference signal (RS) from the base station on the basis of the configuration information; predicting second beam information relating to a second instance on the basis of artificial intelligence (AI); and transmitting the beam information including the first beam information and the second beam information to the base station.

## Description

### [Technical Field]

The present disclosure relates to a wireless communication system, and more specifically, to a method for transmitting or receiving beam information and a device therefor.

### [Background Art]

Mobile communication systems have been developed to provide a voice service while ensuring the activity of a user. However, the area of the mobile communication systems has extended to a data service in addition to a voice. Due to the current explosive increase in traffic, there is a shortage of resources, and thus users demand a higher speed service. Accordingly, there is a need for a more advanced mobile communication system.

Requirements for next-generation mobile communication systems need to able to support the accommodation of explosive data traffic, a dramatic increase in data rate per user terminal, the accommodation of a significant increase in the number of connected devices, very low end-to-end latency, and high-energy efficiency. To this end, studies have been conducted on various technologies such as dual connectivity, massive multiple input multiple output (MIMO), in-band full duplex, non-orthogonal multiple access (NOMA), super wideband support, and device networking.

Meanwhile, in the case of existing beam reporting operations, beam information including beam quality values for an instantaneous specific location or wireless channel environment is measured/reported. According to the existing beam reporting operation, if the location of a user equipment (UE) changes, the reported beam information may not reflect the changed location, which may result in performance degradation in terms of beam quality between a base station and the UE. To solve this, beam management/beam reporting operations may be performed frequently, but signaling overhead and latency may increase.

### [Disclosure]

### [Technical Problem]

In order to solve the above-described problem, the present disclosure provides a method and device for reporting/transmitting predicted future beam information in consideration of a user equipment (UE) mobility based on artificial intelligence (AI).

In addition, the present disclosure proposes a method and device for reporting/transmitting information about the probability of becoming the best beam at a specific time point in the future.

In addition, the present disclosure proposes a method and device for reporting/transmitting beam information for the current time point and beam information for a predicted future time point together.

In addition, the present disclosure proposes a method and device for reporting/transmitting beam information and information on the switching time for each beam/panel applied when changing/updating the beam.

In addition, the present disclosure proposes a method and device for reporting/transmitting beam information and information about the time when the beam information is valid.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Technical Solution]

The present disclosure proposes for transmitting beam information in a wireless communication system. The method performed by a user equipment (UE) may comprise receiving configuration information about the beam information from a base station, receiving at least one reference signal (RS) from the base station based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and transmitting the beam information including the first beam information and the second beam information to the base station.

In addition, in the above method of the present disclosure, the first instance may be a reception time point of the at least one RS, a measurement time point of the at least one RS, or a transmission time point of the first beam information, and the second instance may be a preconfigured time point after the first instance.

In addition, in the above method of the present disclosure, the second beam information may be predicted based on a predicted position of the UE in the second instance.

In addition, in the above method of the present disclosure, the second beam information may further include information about a preferred panel in the second instance.

In addition, in the above method of the present disclosure, the quality value may be a reference signal received power (RSRP) value or a signal to interference plus noise ratio (SINR) value.

In addition, in the above method of the present disclosure, the RS may be a synchronization signal block (SSB) or a channel state information-reference signal (CSI-RS).

In addition, in the above method of the present disclosure, the RS ID may be a SSB resource indicator (SSBRI) or a CSI-RS resource indicator (CRI).

In addition, in the above method of the present disclosure, the beam information may further include information about a time period in which the beam information is valid.

In addition, a user equipment (UE) configured to transmit beam information in a wireless communication system, the UE may comprise at least one transceiver, at least one processor, and at least one memory operably connected to the at least one processor, and storing instructions for performing operations based on being executed by the at least one processor, wherein the operations may include receiving configuration information about the beam information from a base station, receiving at least one reference signal (RS) from the base station based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and transmitting the beam information including the first beam information and the second beam information to the base station.

In addition, the present disclosure proposes a method for receiving beam information in a wireless communication system. The method performed by a base station may comprise transmitting configuration information about the beam information to a user equipment (UE), transmitting at least one reference signal (RS) to the UE based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and receiving the beam information including the first beam information and the second beam information from the UE.

In addition, in the above method of the present disclosure, the first instance may be a reception time point of the at least one RS, a measurement time point of the at least one RS, or a transmission time point of the first beam information, and the second instance may be a preconfigured time point after the first instance.

In addition, in the above method of the present disclosure, the second beam information may be predicted based on a predicted position of the UE in the second instance.

In addition, in the above method of the present disclosure, the second beam information may further include information about a preferred panel in the second instance.

In addition, in the above method of the present disclosure, the quality value may be a reference signal received power (RSRP) value or a signal to interference plus noise ratio (SINR) value.

In addition, in the above method of the present disclosure, the RS may be a synchronization signal block (SSB) or a channel state information-reference signal (CSI-RS).

In addition, in the above method of the present disclosure, the RS ID may be a SSB resource indicator (SSBRI) or a CSI-RS resource indicator (CRI).

In addition, in the above method of the present disclosure, the beam information may further include information about a time period in which the beam information is valid.

In addition, a base station configured to receive beam information in a wireless communication system, the base station may comprise at least one transceiver, at least one processor, and at least one memory operably connected to the at least one processor, and storing instructions for performing operations based on being executed by the at least one processor, wherein the operations may include transmitting configuration information about the beam information to a user equipment (UE), transmitting at least one reference signal (RS) to the UE based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and receiving the beam information including the first beam information and the second beam information from the UE.

In addition, a processing apparatus configured to control a user equipment (UE) to transmit beam information in a wireless communication system, the processing apparatus may comprise at least one processor, and at least one memory operably connected to the at least one processor, and storing instructions for performing operations based on being executed by the at least one processor, wherein the operations may include receiving configuration information about the beam information from a base station, receiving at least one reference signal (RS) from the base station based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and transmitting the beam information including the first beam information and the second beam information to the base station.

In addition, a computer-readable storage medium storing at least one instruction, wherein the least one instruction causes at least one processor to control operations based on being executed by the at least one processor in the present disclosure, wherein the operations may include receiving configuration information about the beam information from a base station, receiving at least one reference signal (RS) from the base station based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and transmitting the beam information including the first beam information and the second beam information to the base station.

### [Advantageous Effects]

According to the present disclosure, based on AI, by reporting/transmitting predicted future beam information in consideration of a user equipment (UE) mobility, there is an effect of reducing signaling overhead and latency while maintaining high beam quality for a mobile UE.

In addition, according to the present disclosure, by reporting/transmitting information about the probability of becoming the best beam at a specific time point in the future, there is an effect of improving communication quality between mobile UEs and base stations.

In addition, according to the present disclosure, by reporting/transmitting beam information for the current time point and beam information for a predicted future specific time point, there is an effect of improving communication quality between mobile UEs and base stations.

In addition, according to the present disclosure, by reporting/transmitting beam information and information about the switching time for each beam/panel applied when changing/updating the beam, together with the beam information, there is an effect of improving communication quality between mobile UEs and base stations.

In addition, according to the present disclosure, by reporting/transmitting information about the time when the beam information is valid together with the beam information, there is an effect of improving communication quality between mobile UEs and base stations.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [Description of Drawings]

The accompanying drawings, which are included to provide a further understanding of the present disclosure and constitute a part of the detailed description, illustrate embodiments of the present disclosure and serve to explain technical features of the present disclosure together with the description.
FIG. 1 illustrates an example of an overall system structure of NR to which a method described in the present disclosure is applicable.
FIG. 2 illustrates a relationship between an uplink frame and a downlink frame in a wireless communication system to which a method described in the present disclosure is applicable.
FIG. 3 illustrates an example of a frame structure in an NR system.
FIG. 4 illustrates an example of a resource grid supported by a wireless communication system to which a method described in the present disclosure is applicable.
FIG. 5 illustrates a slot structure of an NR frame to which a method described in the present disclosure is applicable.
FIG. 6 illustrates examples of a resource grid per antenna port and numerology to which a method described in the present disclosure is applicable.
FIG. 7 illustrates physical channels and general signal transmission used in a 3GPP system.
FIG. 8 is a concept view illustrating an example of a beam-related measurement model.
FIG. 9 illustrates an example of a Tx beam related to a DL BM procedure.
FIG. 10 is a flow chart illustrating an example of a DL BM procedure using an SSB.
FIG. 11 illustrates an example of a DL BM procedure using a CSI-RS.
FIG. 12 is a flow chart illustrating an example of a receive (Rx) beam determination process of a UE.
FIG. 13 is a flow chart illustrating an example of a transmit (Tx) beam determination process of a base station.
FIG. 14 illustrates an example of resource allocation in a time domain and a frequency domain related to an operation of FIG. 11.
FIG. 15 illustrates an example of an UL BM procedure using an SRS.
FIG. 16 is a flow chart illustrating an example of an UL BM procedure using an SRS.
FIG. 17 illustrates an example of downlink transmission and reception operation.
FIG. 18 illustrates an example of uplink transmission and reception operation.
FIG. 19 is a diagram illustrating concept of AI/ML.
FIG. 20 illustrates a feed-forward neural network.
FIG. 21 illustrates a recurrent neural network.
FIG. 22 illustrates a convolutional neural network.
FIG. 23 illustrates an auto encoder.
FIG. 24 is a diagram illustrating split AI inference.
FIG. 25 is a diagram illustrating a functional framework for AI operation.
FIG. 26 illustrates AI operations performed by a UE, RAN nodes, and network nodes.
FIG. 27 illustrates AI operations performed by the UE and RAN nodes.
FIG. 28 illustrates AI operations performed by a UE and a RAN node.
FIG. 29 is a flow chart illustrating an operation method of a UE described in the present disclosure.
FIG. 30 is a flow chart illustrating an operation method of a base station described in the present disclosure.
FIG. 31 illustrates a communication system (1) applied to the present disclosure.
FIG. 32 illustrates a wireless device applicable to the present disclosure.
FIG. 33 illustrates another example of a wireless device applied to the present disclosure.
FIG. 34 illustrates a portable device applied to the present disclosure.

### [Mode for Invention]

Reference will now be made in detail to embodiments of the disclosure, examples of which are illustrated in the accompanying drawings. A detailed description to be disclosed below together with the accompanying drawing is to describe exemplary embodiments of the disclosure and not to describe a unique embodiment for carrying out the disclosure. The detailed description below includes details to provide a complete understanding of the disclosure. However, those skilled in the art know that the disclosure may be carried out without the details.

In some cases, in order to prevent a concept of the disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In downlink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the disclosure is described based on the 3GPP communication system (e.g., LTE-A or NR), but the technical spirit of the disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a standard document detail number. Matters disclosed in a standard document opened before the disclosure may be referred to for a background art, terms, abbreviations, etc., used for describing the disclosure. For example, the following documents may be referred to.

### 3GPP LTE

- 36.211: Physical channels and modulation
- 36.212: Multiplexing and channel coding
- 36.213: Physical layer procedures
- 36.300: Overall description
- 36.331: Radio Resource Control (RRC)

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billions. The industry IoT is one of areas in which 5G performs major roles enabling smart city, asset tracking, smart utility, agriculture and security infra.

URLLC includes a new service which will change the industry through remote control of major infra and a link having ultra-reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of megabits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver can drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system can support remote treatment providing clinical treatment at a distant place. This helps to reduce a barrier for the distance and can improve access to medical services which are not continuously used at remote farming areas. Furthermore, this is used to save life in important treatment and an emergency condition. A radio sensor network based on mobile communication can provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

### Definition of Terms

eLTE eNB: The eLTE eNB is the evolution of eNB that supports connectivity to EPC and NGC.
gNB: A node which supports the NR as well as connectivity to NGC.
New RAN: A radio access network which supports either NR or E-UTRA or interfaces with the NGC.
Network slice: A network slice is a network created by the operator customized to provide an optimized solution for a specific market scenario which demands specific requirements with end-to-end scope.
Network function: A network function is a logical node within a network infrastructure that has well-defined external interfaces and well-defined functional behavior.
NG-C: A control plane interface used on NG2 reference points between new RAN and NGC.
NG-U: A user plane interface used on NG3 references points between new RAN and NGC.
Non-standalone NR: A deployment configuration where the gNB requires an LTE eNB as an anchor for control plane connectivity to EPC, or requires an eLTE eNB as an anchor for control plane connectivity to NGC.
Non-standalone E-UTRA: A deployment configuration where the eLTE eNB requires a gNB as an anchor for control plane connectivity to NGC.
User plane gateway: A termination point of NG-U interface.

### Overview of system

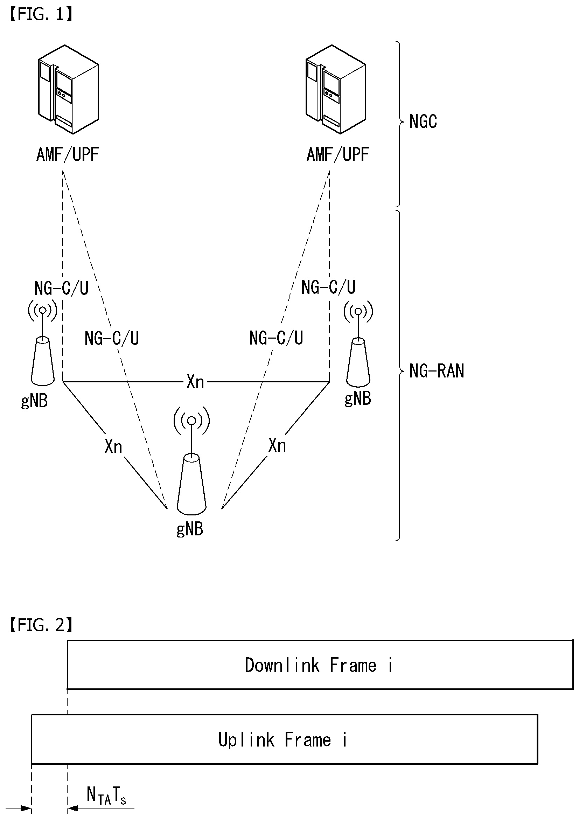

FIG. 1 illustrates an example of an overall structure of an NR system to which a method proposed in the disclosure may be applied.

Referring to FIG. 1, an NG-RAN is configured with an NG-RA user plane (new AS sublayer/PDCP/RLC/MAC/PHY) and gNBs which provide a control plane (RRC) protocol end for a user equipment (UE).

The gNBs are interconnected through an Xn interface.

The gNBs are also connected to an NGC through an NG interface.

More specifically the gNBs are connected to an access and mobility management function (AMF) through an N2 interface and to a user plane function (UPF) through an N3 interface.

### New Rat (NR) Numerology and Frame Structure

In the NR system, multiple numerologies may be supported. The numerologies may be defied by subcarrier spacing and a CP (Cyclic Prefix) overhead. Spacing between the plurality of subcarriers may be derived by scaling basic subcarrier spacing into an integer N (or *µ*). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

**[Table 1]**

| *µ* | Δ*f* = *2^{,u}* ·15 [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as two types of frequency ranges (FR1 and FR2). FR1 and FR2 may be configured as shown in Table 2 below. Further, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of *Tₛ* = 1/(Δ*f*ₘₐₓ · *N*_{f}). In this case, Δ*f*ₘₐₓ = 480·10³, and *N*_{f} = 4096. DL and UL transmission is configured as a radio frame having a section of *T*_{f} *=* (Δ*f*ₘₐₓ*N*_{f}/100)*·Tₛ* = 10 ms. The radio frame is composed of ten subframes each having a section of *T*_{sf} *=* Δ*f*ₘₐₓ*N*_{f}/1000)*·Tₛ* = 1 ms. In this case, there may be a set of UL frames and a set of DL frames.

FIG. 2 illustrates the relation between an uplink frame and a downlink frame in a wireless communication system to which a method proposed in the disclosure may be applied.

As illustrated in FIG. 2, uplink frame number i for transmission from a user equipment (UE) shall start *T*_{TA} = *N*_{TA}*T*ₛ before the start of a corresponding downlink frame at the corresponding UE.

Regarding the numerology *µ*, slots are numbered in increasing order of ${n}_{s}^{μ} ∈ \left\{0,…, {N}_{subframe}^{slots , μ}-1\right\}$ within a subframe and are numbered in increasing order of ${n}_{s , f}^{μ} ∈ \left\{0,…,{N}_{frame}^{slots , μ}-1\right\}$ within a radio frame. One slot consists of consecutive OFDM symbols of ${N}_{symb}^{μ}$, and ${N}_{symb}^{μ}$ is determined depending on a numerology used and slot configuration. The start of slots ${n}_{s}^{μ}$ in a subframe is aligned in time with the start of OFDM symbols ${n}_{s}^{μ} {N}_{symb}^{μ}$ in the same subframe.

Not all UEs are able to transmit and receive at the same time, and this means that not all OFDM symbols in a downlink slot or an uplink slot are available to be used.

Table 3 represents the number ${N}_{symb}^{slot}$ of OFDM symbols per slot, the number ${N}_{slot}^{frame , μ}$ of slots per radio frame, and the number ${N}_{slot}^{subframe , μ}$ of slots per subframe in a normal CP. Table 4 represents the number of OFDM symbols per slot, the number of slots per radio frame, and the number of slots per subframe in an extended CP.

**[Table 3]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| *µ* | ${N}_{symb}^{slot}$ | ${N}_{slot}^{frame , μ}$ | ${N}_{slot}^{subframe , μ}$ |
|---|---|---|---|
| 2 | 12 | 40 | 4 |

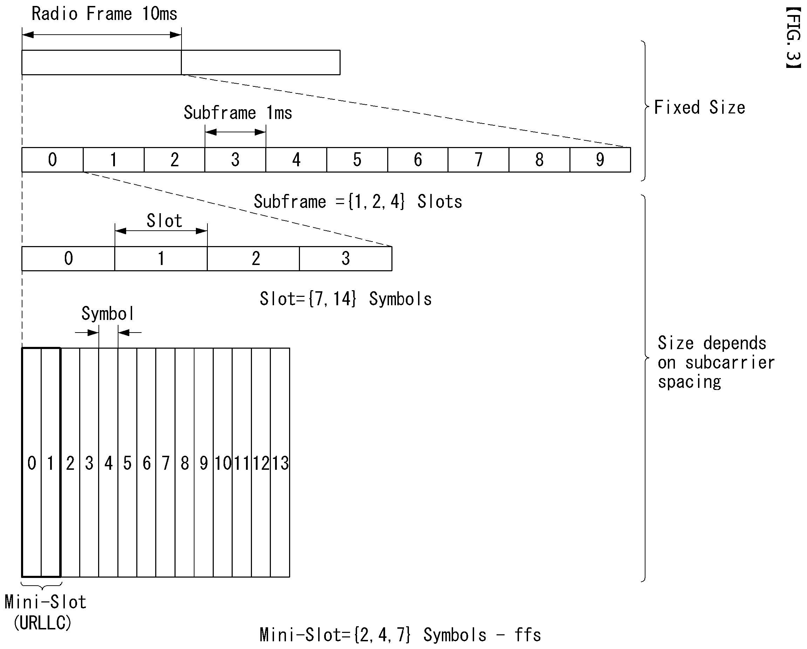

FIG. 3 illustrates an example of a frame structure in a NR system. FIG. 3 is merely for convenience of explanation and does not limit the scope of the disclosure.

In Table 4, in case of *µ*=2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In relation to physical resources in the NR system, an antenna port, a resource grid, a resource element, a resource block, a carrier part, etc., may be considered.

Hereinafter, the above physical resources that may be considered in the NR system are described in more detail.

First, in relation to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. In this case, the large-scale properties may include at least one of delay spread, Doppler spread, frequency shift, average received power, and received timing.

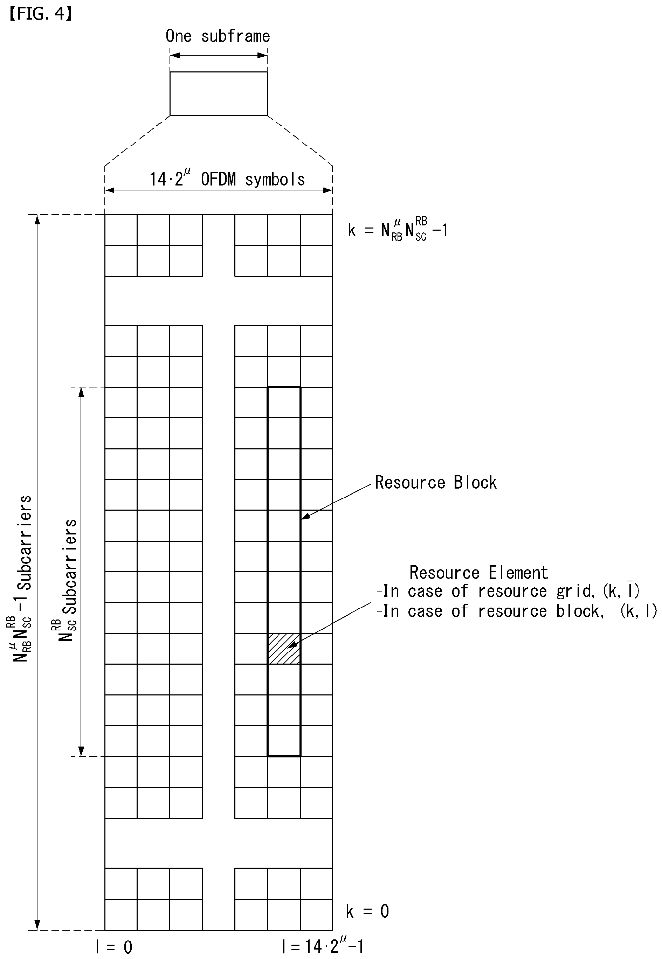

FIG. 4 illustrates an example of a resource grid supported in a wireless communication system to which a method proposed in the disclosure may be applied.

Referring to FIG. 4, a resource grid consists of ${N}_{RB}^{μ} {N}_{sc}^{RB}$ subcarriers on a frequency domain, each subframe consisting of 14·2µ OFDM symbols, but the disclosure is not limited thereto.

In the NR system, a transmitted signal is described by one or more resource grids, consisting of ${N}_{RB}^{μ} {N}_{sc}^{RB}$ subcarriers, and ${2}^{μ} {N}_{symb}^{\left(μ\right)}$ OFDM symbols, where ${N}_{RB}^{μ} \leq {N}_{RB}^{max , μ}$. ${N}_{RB}^{max , μ}$ denotes a maximum transmission bandwidth and may change not only between numerologies but also between uplink and downlink.

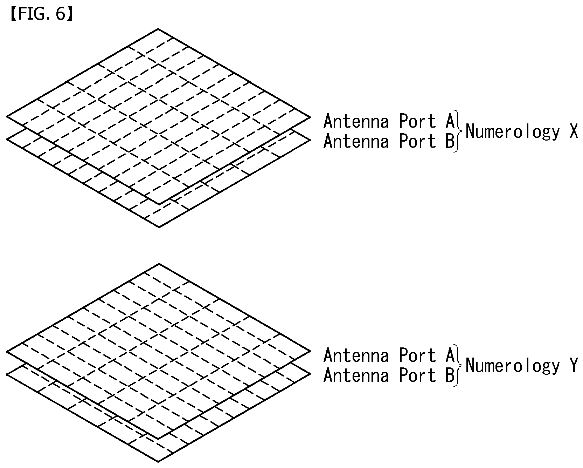

In this case, as illustrated in FIG. 6, one resource grid may be configured per numerology *µ* and antenna port p.

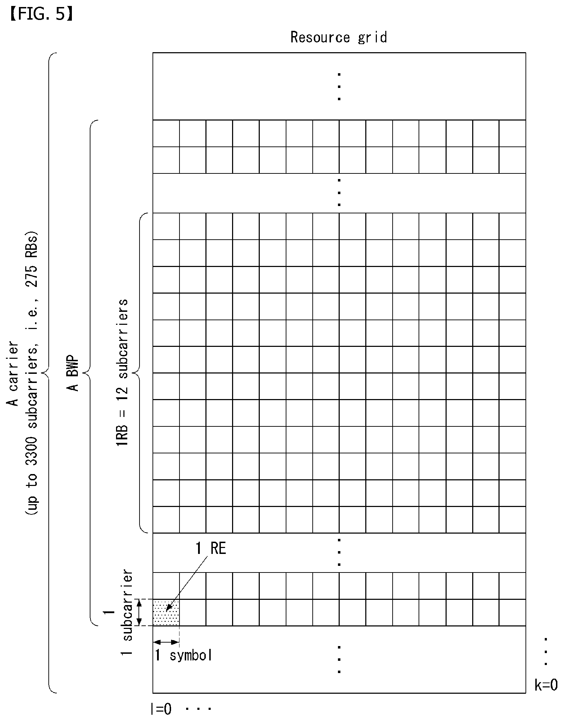

FIG. 5 illustrates a slot structure of an NR frame to which a method described in the present disclosure is applicable.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

FIG. 6 illustrates examples of a resource grid per antenna port and numerology to which a method proposed in the disclosure is applicable.

Each element of the resource grid for the numerology *µ* and the antenna port p is called a resource element and is uniquely identified by an index pair (*k,l̅*), where $k = 0 , … , {N}_{RB}^{μ} {N}_{sc}^{RB} - 1$ is an index on a frequency domain, and $\overline{l} = 0 , … {, 2}^{μ} {N}_{symb}^{\left(μ\right)} - 1$ refers to a location of a symbol in a subframe. The index pair (*k,*/) is used to refer to a resource element in a slot, where $l = 0 , … , {N}_{symb}^{μ} - 1$.

The resource element (*k*,*l̅*) for the numerology *µ* and the antenna port p corresponds to a complex value ${a}_{k , \overline{l}}^{\left(p, μ\right)}$*.* When there is no risk for confusion or when a specific antenna port or numerology is not specified, the indexes p and *µ* may be dropped, and as a result, the complex value may be ${a}_{k , \overline{l}}^{\left(p\right)}$ or *a_{k,l̅}*.

Further, a physical resource block is defined as ${N}_{sc}^{RB} = 12$ consecutive subcarriers in the frequency domain.

Point A serves as a common reference point of a resource block grid and may be obtained as follows.
offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
absoluteFrequencyPointA represents frequency-location of the point A expressed as in absolute radio-frequency channel number (ARFCN).

The common resource blocks are numbered from 0 and upwards in the frequency domain for subcarrier spacing configuration *µ*.

The center of subcarrier 0 of common resource block 0 for the subcarrier spacing configuration *µ* coincides with 'point A'. A common resource block number ${n}_{CRB}^{μ}$ in the frequency domain and resource elements (k, 1) for the subcarrier spacing configuration *µ* may be given by the following Equation 1. [Equation 1] ${n}_{CRB}^{μ} = \left⌊\frac{k}{{N}_{sc}^{RB}}\right⌋$

Here, *k* may be defined relative to the point A so that *k =* 0 corresponds to a subcarrier centered around the point A. Physical resource blocks are defined within a bandwidth part (BWP) and are numbered from 0 to ${N}_{BWP , i}^{size} - 1$, where *i* is No. of the BWP. A relation between the physical resource block *n*_{PRB} in BWP *i* and the common resource block *n*_{CRB} may be given by the following Equation 2. [Equation 2] ${n}_{CRB} = {n}_{PRB} + {N}_{BWP , i}^{start}$

Here, ${N}_{BWP , i}^{start}$ may be the common resource block where the BWP starts relative to the common resource block 0.

### Physical Channel and General Signal Transmission

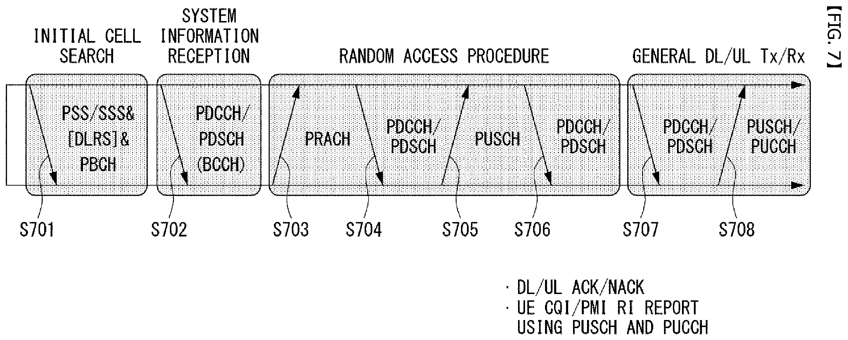

FIG. 7 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S701). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S702).

Meanwhile, when there is no radio resource first accessing the eNB or for signal transmission, the UE may perform a Random Access Procedure (RACH) to the eNB (S703 to S706). To this end, the UE may transmit a specific sequence to a preamble through a Physical Random Access Channel (PRACH) (S703 and S705) and receive a response message (Random Access Response (RAR) message) for the preamble through the PDCCH and a corresponding PDSCH. In the case of a contention based RACH, a Contention Resolution Procedure may be additionally performed (S706).

The UE that performs the above procedure may then perform PDCCH/PDSCH reception (S707) and Physical Uplink Shared Channel (PUSCH)/Physical Uplink Control Channel (PUCCH) transmission (S708) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

The control information transmitted by the UE to the base station or received by the UE from the base station through the uplink may include a downlink/uplink ACK/NACK signal, a channel quality indicator (CQI), a precoding matrix index (PMI), a rank indicator (RI), etc. The UE may transmit control information, such as CQI/PMI/RI described above, through PUSCH and/or PUCCH.

### Beam Management (BM) Procedure

A beam management (BM) procedure defined in new radio (NR) is described.

The BM procedure, as layer 1 (L1)/layer 2 (L2) procedures for obtaining and maintaining a set of base station (e.g., gNB, TRP, etc.) and/or terminal (e.g., UE) beams available for downlink (DL) and uplink (UL) transmission/reception, may include the following procedures and terms.
- Beam measurement: operation for the base station or the UE to measure the characteristics of a received beamformed signal
- Beam determination: operation for the base station or the UE to select its transmit beam (Tx beam)/receive beam (Rx beam).
- Beam sweeping: operation of covering a space region using the Tx and/or Rx beam for a predetermined time interval in a predetermined manner.
- Beam report: operation for the UE to report information on a beamformed signal based on the beam measurement.

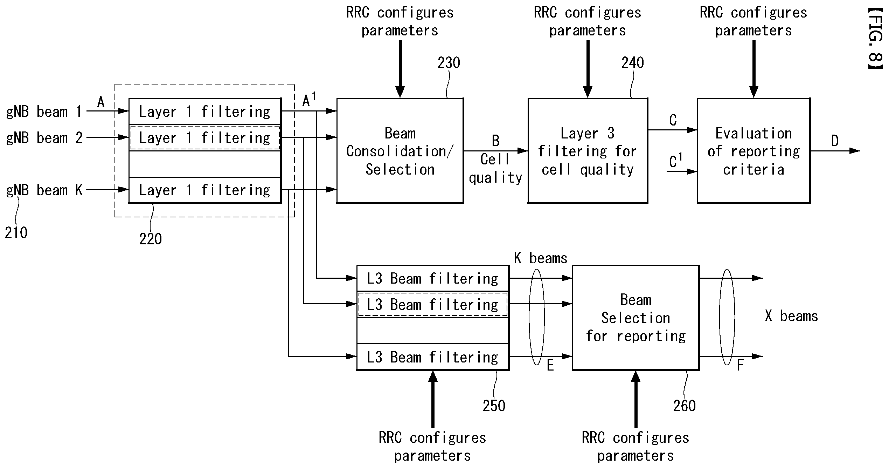

FIG. 8 is a concept view illustrating an example of a beam-related measurement model.

For beam measurement, an SS block (or SS/PBCH block (SSB)) or a channel state information-reference signal (CSI-RS) is used in the downlink, and a sounding reference signal (SRS) is used in the uplink.

In RRC_CONNECTED, a UE measures multiple beams (or at least one beam) of a cell, and the UE may average measurement results (RSRP, RSRQ, SINR, etc.) to derive the cell quality.

Through this, the UE may be configured to consider a sub-set of the detected beam(s).

Beam measurement-related filtering takes place at two different levels (at the physical layer to derive beam quality and then at RRC level to derive cell quality from multiple beams).

The cell quality from beam measurement is derived in the same way for serving cell(s) and for non-serving cell(s).

If the UE is configured by a gNB to report the measurement results for specific beam(s), measurement reports include measurement results for X best beams. The beam measurement result may be reported as L1-reference signal received power (RSRP).

In FIG. 8, K beams (gNB beam 1, gNB beam 2, ..., gNB beam k) 210 correspond to the measurements on synchronization signal (SS) block (SSB) or CSI-RS resources configured for L3 mobility by the gNB and detected by the UE at L1.

In FIG. 8, layer 1 filtering 220 denotes internal layer 1 filtering of inputs measured at point A.

Further, in beam consolidation/selection 230, beam-specific measurements are consolidated (or merged) to derive cell quality.

Layer 3 filtering 240 for cell quality denotes filtering performed on measurements provided at point B.

The UE evaluates reporting criteria whenever new measurement results are reported at least at points C and C1.

D corresponds to measurement report information (message) transmitted at a radio interface.

In L3 beam filtering 250, filtering is performed on measurements (beam-specific measurement) provided at point A1.

In beam selection 260 for beam report, X measurement values are selected in measurements provided at point E.

F denotes beam measurement information included in measurement report (sent) on the radio interface.

The BM procedure may be divided into (1) a DL BM procedure using synchronization signal (SS)/physical broadcast channel (PBCH) block or CSI-RS, and (2) an UL BM procedure using a sounding reference signal (SRS).

Further, each BM procedure may include Tx beam sweeping for determining the Tx beam and RX beam sweeping for determining the Rx beam.

### DL BM Procedure

A DL BM procedure is first described.

The DL BM procedure may include (1) transmission for beamformed DL reference signals (RSs) (e.g., CSI-RS or SS block (SSB)) of a base station, and (2) beam reporting of a UE.

The beam reporting may include preferred DL RS identifier(s) (ID) and its corresponding L1-reference signal received power (RSRP).

The DL RS ID may be a SSB resource indicator (SSBRI) or a CSI-RS resource Indicator (CRI).

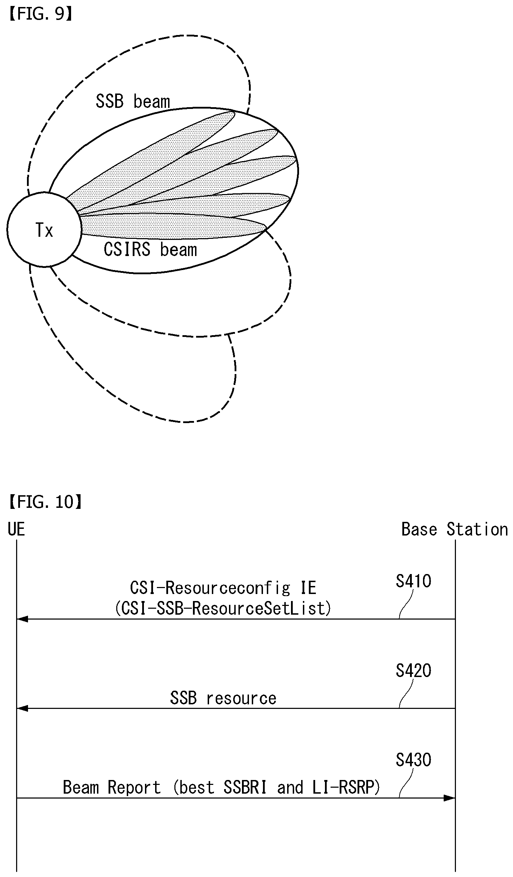

FIG. 9 illustrates an example of a DL BM procedure related Tx beam.

As illustrated in FIG. 9, a SSB beam and a CSI-RS beam may be used for beam measurement.

A measurement metric is L1-RSRP per resource/block.

The SSB may be used for coarse beam measurement, and the CSI-RS may be used for fine beam measurement.

The SSB may be used for both Tx beam sweeping and Rx beam sweeping.

The Rx beam sweeping using the SSB may be performed while the UE changes Rx beam for the same SSBRI across multiple SSB bursts.

One SS burst includes one or more SSBs, and one SS burst set includes one or more SSB bursts.

### DL BM Procedure using SSB

FIG. 10 is a flow chart illustrating an example of a DL BM procedure using a SSB.

The configuration for beam report using a SSB is performed upon CSI/beam configuration in a RRC connected state (or RRC connected mode).

As shown in CSI-ResourceConfig IE of Table 5, the BM configuration using the SSB is not separately defined and configures the SSB like CSI-RS resource.

Table 5 represents an example of CSI-ResourceConfig IE.

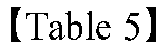

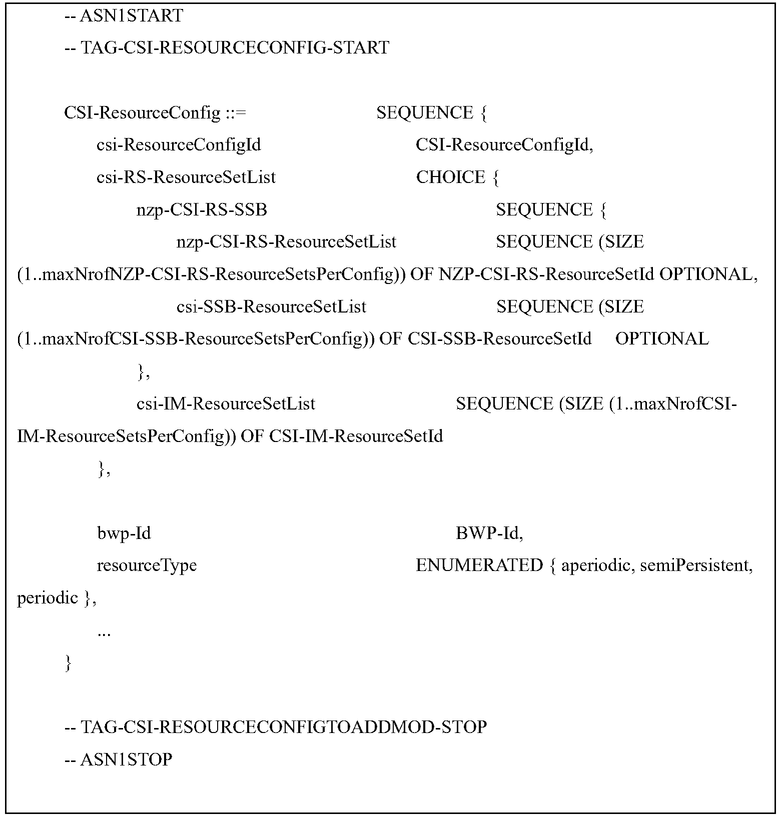

In Table 5, csi-SSB-ResourceSetList parameter denotes a list of SSB resources used for the beam management and reporting in one resource set.

A UE receives, from the base station, CSI-ResourceConfig IE including CSI-SSB-ResourceSetList including SSB resources used for the BM, in S410.

The SSB resource set may be configured as {SSBx1, SSBx2, SSBx3, SSBx4, ...}.

The SSB index may be defined from 0 to 63.

The UE receives the SSB resource from the base station based on the CSI-SSB-ResourceSetList, in S420.

If CSI-RS reportConfig related to a report for SSBRI and L1-RSRP is configured, the UE (beam-)reports the best SSBRI and its corresponding L1-RSRP to the base station, in S430.

That is, if reportQuantity of the CSI-RS reportConfig IE is set to 'ssb-Index-RSRP', the UE reports the best SSBRI and its corresponding L1-RSRP to the base station.

In addition, if the UE is configured with the CSI-RS resource in the same OFDM symbol(s) as SSB (SS/PBCH Block), and 'QCL-TypeD' is applicable, the UE may assume that the CSI-RS and the SSB are quasi co-located in terms of 'QCL-TypeD'.

The QCL TypeD may mean that the antenna ports are QCLed in terms of spatial Rx parameter. The same Rx beam may be applied when the UE receives a plurality of DL antenna ports with the QCL Type D relation.

Further, the UE does not expect that the CSI-RS is configured in an RE overlapping an RE of the SSB.

### DL BM Procedure using CSI-RS

If a UE is configured with a NZP-CSI-RS-ResourceSet configured with the (higher layer parameter) repetition set to 'ON', the UE may assume that at least one CSI-RS resource within the NZP-CSI-RS-ResourceSet is transmitted with the same downlink spatial domain transmission filter.

That is, the at least one CSI-RS resource within the NZP-CSI-RS-ResourceSet is transmitted through the same Tx beam.

In this case, the at least one CSI-RS resource within the NZP-CSI-RS-ResourceSet may be transmitted in different OFDM symbols or may be transmitted in different frequency domains (i.e., through FDM).

A case where the at least one CSI-RS resource is FDMed is a case where a UE is a multi-panel UE.

Further, a case where the repetition is set to 'ON' is related to an Rx beam sweeping procedure of the UE.

The UE does not expect to receive different periodicities in periodicityAndOffset in all CSI-RS resources within NZP-CSI-RS-Resourceset.

If the repetition is set to 'OFF', the UE does not assume that at least one CSI-RS resource within NZP-CSI-RS-ResourceSet is transmitted with the same downlink spatial domain transmission filter.

That is, the at least one CSI-RS resource within NZP-CSI-RS-ResourceSet is transmitted through different Tx beams.

A case where the repetition is set to 'OFF' is related to a Tx beam sweeping procedure of a base station.

Further, the repetition parameter may be configured only with respect to CSI-RS resource sets associated with CSI-ReportConfig having the report of L1 RSRP or 'No Report (or None)'.

If the UE is configured with a CSI-ReportConfig with reportQuantity set to 'cri-RSRP' or 'none' and if the CSI-ResourceConfig for channel measurement (higher layer parameter resourcesForChannelMeasurement) contains a NZP-CSI-RS-ResourceSet that is configured with the higher layer parameter 'repetition' (repetition=ON) and without the higher layer parameter 'trs-Info', the UE can only be configured with the same number of ports (1-port or 2-port) with the higher layer parameter 'nrofPorts' for all CSI-RS resources within the NZP-CSI-RS-ResourceSet.

More specifically, uses of CSI-RS are described. If a repetition parameter is configured in a specific CSI-RS resource set and TRS_info is not configured, a CSI-RS is used for beam management.

Further, if a repetition parameter is not configured and TRS_info is configured, a CSI-RS is used for a tracking reference signal (TRS).

Furthermore, if a repetition parameter is not configured and TRS_info is not configured, a CSI-RS is used for CSI acquisition.

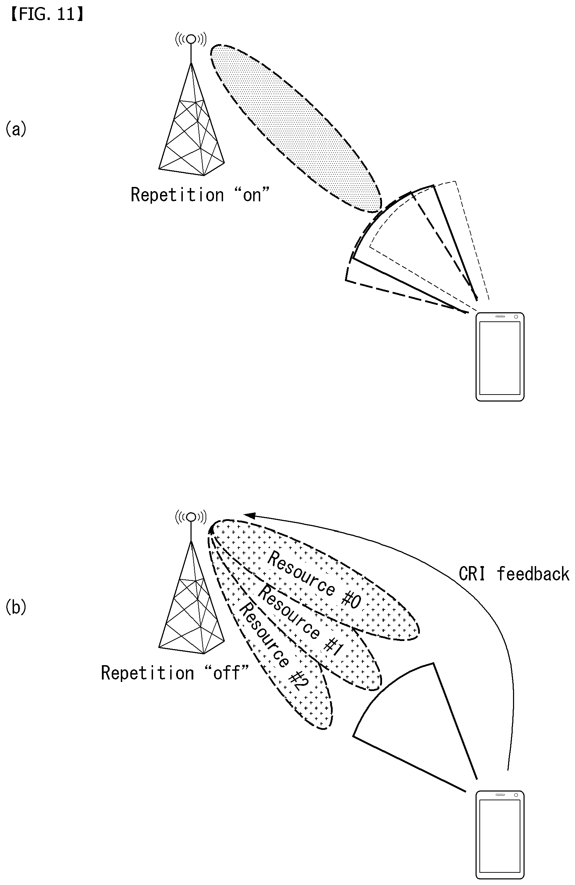

FIG. 11 illustrates an example of a DL BM procedure using a CSI-RS.

In FIG. 11, (a) illustrates an Rx beam determination (or refinement) procedure of a UE, and (b) illustrates a Tx beam determination procedure of a base station.

More specifically, FIG. 11(a) illustrates when a repetition parameter is set to 'ON', and FIG. 11(b) illustrates when a repetition parameter is set to 'OFF'.

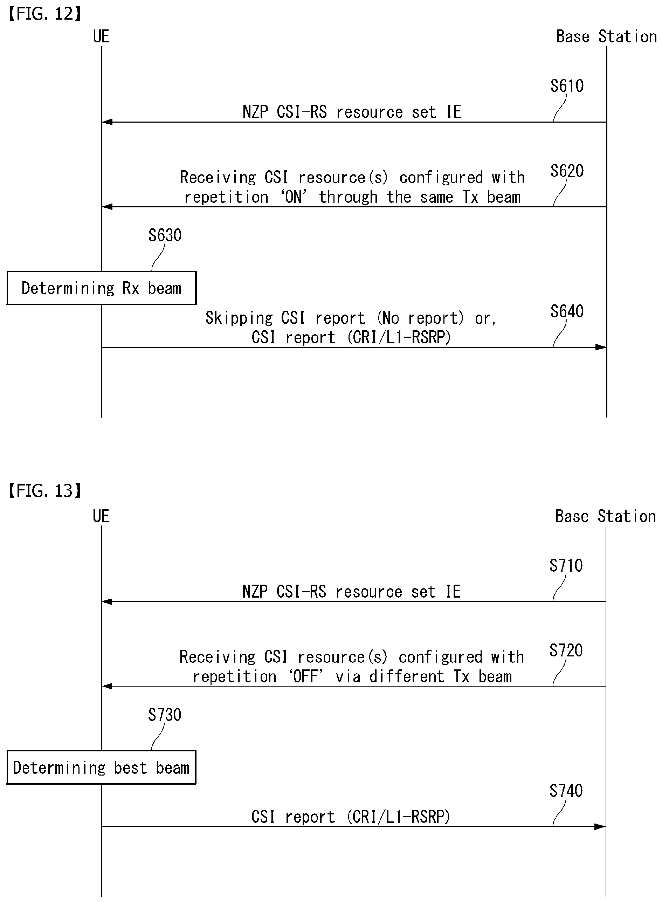

An Rx beam determination process of the UE is described with reference to FIGS. 11(a) and 12.

FIG. 12 is a flow chart illustrating an example of a receive (Rx) beam determination process of a UE.

A UE receives, from a base station, a NZP CSI-RS resource set IE including a higher layer parameter repetition via RRC signaling, in S610.

Here, the repetition parameter is set to 'ON'.

The UE repeatedly receives resource(s) within a CSI-RS resource set configured with repetition 'ON' in different OFDM symbols through the same Tx beam (or DL spatial domain transmission filter) of the base station, in S620.

Through this, the UE determines its Rx beam, in S630.

Here, the UE skips a CSI report or transmits a CSI report including CRI/L1-RSRP to the base station, in S640.

In this case, reportQuantity of CSI report config may be set to 'No report (or None)' or 'CRI + L1-RSRP'.

That is, if the UE is configured with the repetition 'ON', the UE may skip the CSI report or may report ID information (CRI) for a beam pair related preferred beam and its quality value (L1-RSRP).

A Tx beam determination process of the base station is described with reference to FIGS. 11(b) and 13.

FIG. 13 is a flow chart illustrating an example of a transmit (Tx) beam determination process of a base station.

A UE receives, from a base station, a NZP CSI-RS resource set IE including a higher layer parameter repetition via RRC signaling, in S710.

Here, the repetition parameter is set to 'OFF' and is related to the Tx beam sweeping procedure of the base station.

The UE receives resources within a CSI-RS resource set configured with repetition 'OFF' via different Tx beams (DL spatial domain transmission filter) of the base station, in S720.

The UE selects (or determines) the best beam in S740, and reports an ID and relevant quality information (e.g., L1-RSRP) for the selected beam to the base station in S740.

In this case, reportQuantity of CSI report config may be set to 'CRI + L1-RSRP'.

That is, if the CSI-RS is transmitted for the BM, the UE reports CRI and L1-RSRP therefor to the base station.

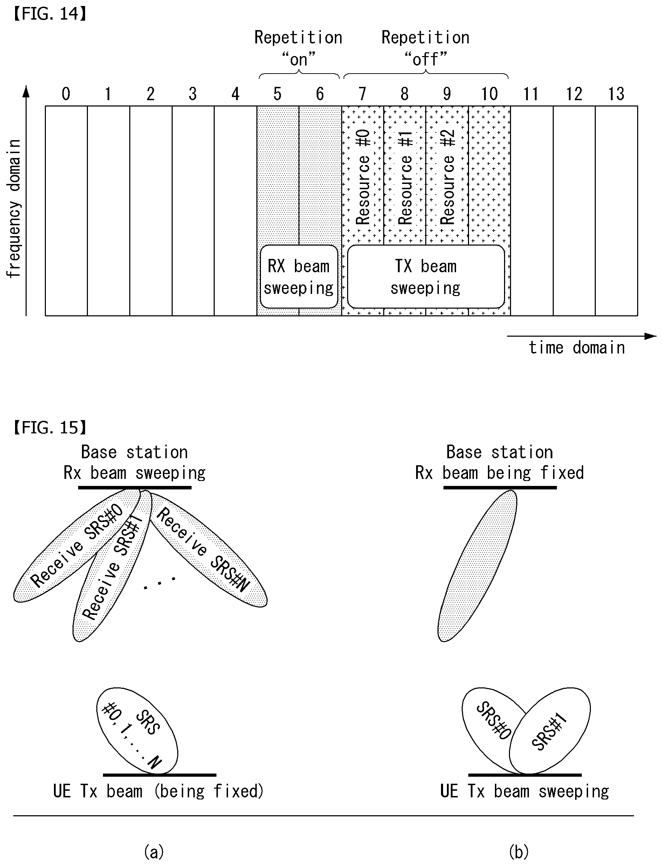

FIG. 14 illustrates an example of resource allocation in a time domain and a frequency domain related to the operation of FIG. 11.

That is, if repetition 'ON' is configured in a CSI-RS resource set, a plurality of CSI-RS resources may apply the same Tx beam and may be repeatedly used, and if repetition 'OFF' is configured in the CSI-RS resource set, different CSI-RS resources may be transmitted via different Tx beams.

### DL BM related beam indication

A UE may be RRC-configured with a list of up to M candidate transmission configuration indication (TCI) states at least for the purpose of quasi co-location (QCL) indication, where M may be 64.

Each TCI state may be configured with one RS set.

Each ID of DL RS at least for the purpose of spatial QCL (QCL Type D) in an RS set may refer to one of DL RS types such as SSB, P-CSI RS, SP-CSI RS, A-CSI RS, etc.

Initialization/update of the ID of DL RS(s) in the RS set used at least for the purpose of spatial QCL may be performed at least via explicit signaling.

Table 6 represents an example of TCI-State IE.

The TCI-State IE associates one or two DL reference signals (RSs) with corresponding quasi co-location (QCL) types.

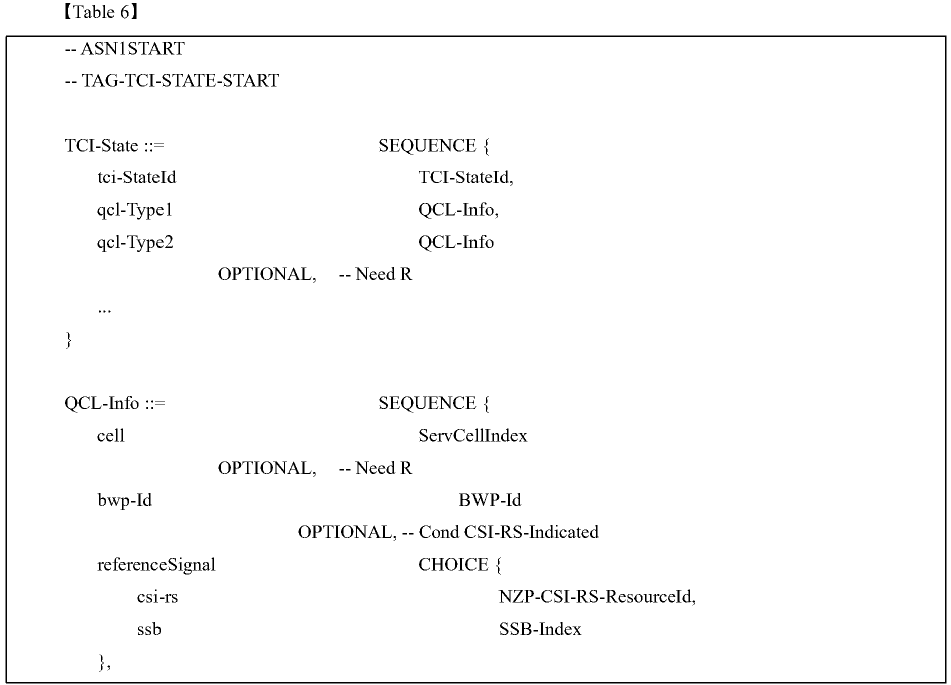

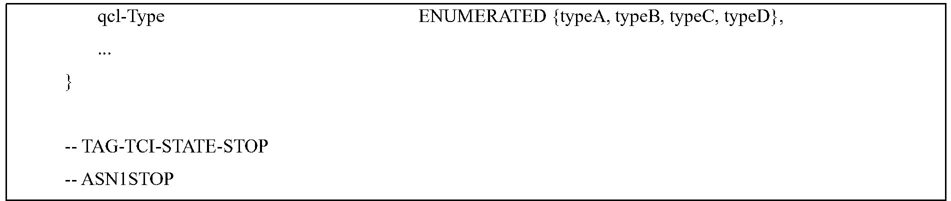

In Table 6, bwp-Id parameter denotes a DL BWP where the RS is located, cell parameter denotes a carrier where the RS is located, and referenceSignal parameter denotes reference antenna port(s) which is a source of quasi co-location for corresponding target antenna port(s) or a reference signal including the one. The target antenna port(s) may be CSI-RS, PDCCH DMRS, or PDSCH DMRS. As an example, in order to indicate QCL reference RS information on NZP CSI-RS, the corresponding TCI state ID may be indicated to NZP CSI-RS resource configuration information. As another example, in order to indicate QCL reference information on PDCCH DMRS antenna port(s), the TCI state ID may be indicated to each CORESET configuration. As another example, in order to indicate QCL reference information on PDSCH DMRS antenna port(s), the TCI state ID may be indicated via DCI.

### Quasi-Co Location (QCL)

The antenna port is defined so that a channel over which a symbol on an antenna port is conveyed can be inferred from a channel over which another symbol on the same antenna port is conveyed. When properties of a channel over which a symbol on one antenna port is conveyed can be inferred from a channel over which a symbol on another antenna port is conveyed, the two antenna ports may be considered as being in a quasi co-located or quasi co-location (QC/QCL) relationship.

The channel properties include one or more of delay spread, Doppler spread, frequency shift, average received power, received timing, and spatial RX parameter. The spatial Rx parameter means a spatial (reception) channel property parameter such as an angle of arrival.

The UE may be configured with a list of up to M TCI-State configurations within the higher layer parameter PDSCH-Config to decode PDSCH according to a detected PDCCH with DCI intended for the corresponding UE and a given serving cell, where M depends on UE capability.

Each TCI-State contains parameters for configuring a quasi co-location relationship between one or two DL reference signals and the DM-RS ports of the PDSCH.

The quasi co-location relationship is configured by the higher layer parameter qcl-Type1 for the first DL RS and qcl-Type2 for the second DL RS (if configured).

For the case of two DL RSs, the QCL types are not be the same, regardless of whether the references are to the same DL RS or different DL RSs.

The quasi co-location types corresponding to each DL RS are given by the higher layer parameter qcl-Type of QCL-Info and may take one of the following values:
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is a specific NZP CSI-RS, the corresponding NZP CSI-RS antenna ports may be indicated/configured to be QCLed with a specific TRS in terms of QCL-TypeA and with a specific SSB in terms of QCL-TypeD. The UE receiving the indication/configuration may receive the corresponding NZP CSI-RS using the Doppler or delay value measured in the QCL-TypeA TRS and apply the Rx beam used for QCL-TypeD SSB reception to the reception of the corresponding NZP CSI-RS reception.

The UE receives an activation command used to map up to eight TCI states to the codepoint of the DCI field 'Transmission Configuration Indication'.

When HARQ-ACK corresponding to the PDSCH carrying the activation command is transmitted in slot n, the indicated mapping between TCI states and codepoints of the DCI field 'Transmission Configuration Indication' may be applied starting from slot n+3Nslotsubframe,µ+1. After a UE receives initial higher layer configuration of TCI states before receiving the activation command, the UE may assume that the DMRS ports of PDSCH of a serving cell are QCLed with the SS/PBCH block determined in the initial access procedure with respect to 'QCL-TypeA', and if applicable, also with respect to 'QCL-TypeD'.

If the higher layer parameter (e.g., tci-PresentInDCI) that is configured for the UE and indicates whether the TCI field within DCI is present is set to 'enabled' for the CORESET scheduling the PDSCH, the UE may assume that the TCI field is present in the DCI format 1_1 of the PDCCH transmitted on the CORESET. If tci-PresentInDCI is not configured for the CORESET scheduling the PDSCH or the PDSCH is scheduled by a DCI format 1_0, and if a time offset between the reception of DL DCI and PDSCH corresponding to this is equal to or greater than a predetermined threshold (e.g., timeDurationForQCL), for determining PDSCH antenna port QCL, the UE may assume that the TCI state or QCL assumption for the PDSCH is identical to the TCI state or QCL assumption applied for the CORESET used for the PDCCH transmission. Here, the predetermined threshold may be based on the reported UE capability.

If the parameter tci-PresentInDCI is set to 'enabled', the TCI field within DCI in a scheduling component carrier (CC) may indicate an activated TCI state of a scheduled CC or DL BWP. When the PDSCH is scheduled by the DCI format 1_1, the UE may use the TCI state based on a value of 'Transmission Configuration Indication' field of the detected PDCCH with DCI, so as to determine the PDSCH antenna port QCL.

If the time offset between the reception of DL DCI and PDSCH corresponding to this is equal to or greater than the predetermined threshold (e.g., timeDurationForQCL), the UE may assume that the DMRS ports of PDSCH of a serving cell are QCLed with the RS(s) in the TCI state with respect to the QCL type parameter(s) given by the indicated TCI state.

If a single slot PDSCH is configured for the UE, the indicated TCI state may be based on an activated TCI state of a slot with the scheduled PDSCH.

If a multi-slot PDSCH is configured for the UE, the indicated TCI state may be based on an activated TCI state of a first slot with the scheduled PDSCH, and the UE may expect that activated TCI states across slots with the scheduled PDSCH are identical.

If the UE is configured with CORESET associated with a search space set for cross-carrier scheduling, the UE may expect that the parameter tci-PresentInDCI with respect to the CORESET is set to 'enabled'. If one or more TCI states are configured for a serving cell scheduled by a search space set including QCL-TypeD, the UE may expect that a time offset between the reception of the PDCCH detected in the search space set and the PDSCH corresponding to this is equal to or greater than the predetermined threshold (e.g., timeDurationForQCL).

For both the cases when the parameter tci-PresentInDCI is set to 'enabled' and the parameter tci-PresentInDCI is not configured in an RRC connection mode, if the offset between the reception of the DL DCI and the corresponding PDSCH is less than the predetermined threshold (e.g., timeDurationForQCL), the UE may assume that the DMRS ports of PDSCH of a serving cell are QCLed with the RS(s) with respect to the QCL parameter(s) used for PDCCH QCL indication of CORESET associated with the monitored search space having the lowest CORESET-ID in the latest slot in which one or more CORESETs within the active BWP of the serving cell are monitored by the UE.

In this case, if QCL-TypeD of the PDSCH DMRS is different from QCL-TypeD of the PDCCH DMRS and they overlap in at least one symbol, the UE may expect that the reception of PDCCH associated with the CORESET is prioritized. This may also be applied for intra-band carrier aggregation (CA) (when the PDSCH and the CORESET are in different CCs). If none of configured TCI states contains 'QCL-TypeD', the UE may obtain the other QCL assumptions from the indicated TCI states for its scheduled PDSCH irrespective of the time offset between the reception of the DL DCI and the corresponding PDSCH.

For a periodic CSI-RS resource in a NZP-CSI-RS-ResourceSet configured with higher layer parameter trs-Info, the UE may expect that a TCI-State indicates one of the following QCL type(s):
- 'QCL-TypeC' with an SS/PBCH block and, when applicable, 'QCL-TypeD' with the same SS/PBCH block, or
- 'QCL-TypeC' with an SS/PBCH block and, when applicable, 'QCL-TypeD' with a CSI-RS resource in an NZP-CSI-RS-ResourceSet configured with higher layer parameter repetition.

For an aperiodic CSI-RS resource in a NZP-CSI-RS-ResourceSet configured with higher layer parameter trs-Info, the UE may expect that a TCI-State indicates 'QCL-TypeA' with a periodic CSI-RS resource in a NZP-CSI-RS-ResourceSet configured with higher layer parameter trs-Info and, when applicable, 'QCL-TypeD' with the same periodic CSI-RS resource.

For a CSI-RS resource in a NZP-CSI-RS-ResourceSet configured without higher layer parameter trs-Info and without the higher layer parameter repetition, the UE may expect that a TCI-State indicates one of the following QCL type(s):
- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with an SS/PBCH block , or
- 'QCL-TypeA' with a CSI-RS resource in a NZP-CSI-RS-ResourceSet configured with higher layer parameter trs-Info and, when applicable, 'QCL-TypeD' with a CSI-RS resource in a NZP-CSI-RS-ResourceSet configured with higher layer parameter repetition, or
- 'QCL-TypeB' with a CSI-RS resource in a NZP-CSI-RS-ResourceSet configured with higher layer parameter trs-Info when 'QCL-TypeD' is not applicable.

For a CSI-RS resource in a NZP-CSI-RS-ResourceSet configured with higher layer parameter repetition, the UE may expect that a TCI-State indicates one of the following QCL type(s):
- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with a CSI-RS resource in a NZP-CSI-RS-ResourceSet configured with higher layer parameter repetition, or
- 'QCL-TypeC' with an SS/PBCH block and, when applicable, 'QCL-TypeD' with the same SS/PBCH block.

For the DMRS of PDCCH, the UE may expect that a TCI-State indicates one of the following QCL type(s):
- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with a CSI-RS resource in an NZP-CSI-RS-ResourceSet configured with higher layer parameter repetition, or
- 'QCL-TypeA' with a CSI-RS resource in a NZP-CSI-RS-ResourceSet configured without higher layer parameter trs-Info and without higher layer parameter repetition and, when applicable, 'QCL-TypeD' with the same CSI-RS resource.

For the DMRS of PDSCH, the UE may expect that a TCI-State indicates one of the following QCL type(s):
- 'QCL-TypeA' with a CSI-RS resource in a NZP-CSI-RS-ResourceSet configured with higher layer parameter trs-Info and, when applicable, 'QCL-TypeD' with the same CSI-RS resource, or
- 'QCL-TypeA' with a CSI-RS resource in a NZP-CSI-RS-ResourceSet configured with higher layer parameter trs-Info and, when applicable, 'QCL-TypeD' with a CSI-RS resource in an NZP-CSI-RS-ResourceSet configured with higher layer parameter repetition, or
- 'QCL-TypeA' with CSI-RS resource in a NZP-CSI-RS-ResourceSet configured without higher layer parameter trs-Info and without repetition and, when applicable, 'QCL-TypeD' with the same CSI-RS resource.

### UL BM Procedure

A UL BM may be configured such that beam reciprocity (or beam correspondence) between a Tx beam and an Rx beam is established or not established depending on the UE implementation. If the beam reciprocity between the Tx beam and the Rx beam is established in both a base station and a UE, a UL beam pair may be adjusted via a DL beam pair. However, if the beam reciprocity between the Tx beam and the Rx beam is not established in any one of the base station and the UE, a process of determining the UL beam pair is necessary separately from the DL beam pair determination.

Even if both the base station and the UE maintain the beam correspondence, the base station may use a UL BM procedure for determining the DL Tx beam even if the UE does not request a report of a (preferred) beam.

The UM BM may be performed via beamformed UL SRS transmission, and whether to apply UL BM of a SRS resource set is configured by the (higher layer parameter) usage. If the usage is set to 'BeamManagement (BM)', only one SRS resource may be transmitted to each of a plurality of SRS resource sets in a given time instant.

The UE may be configured with one or more sounding reference symbol (SRS) resource sets configured by (higher layer parameter) SRS-ResourceSet (via higher layer signaling, RRC signaling, etc.). For each SRS resource set, the UE may be configured with K≥1 SRS resources (higher later parameter SRS-resource), where K is a natural number, and a maximum value of K is indicated by SRS_capability.

In the same manner as the DL BM, the UL BM procedure may be divided into a UE's Tx beam sweeping and a base station's Rx beam sweeping.

FIG. 15 illustrates an example of an UL BM procedure using a SRS. More specifically, FIG. 15(a) illustrates an Rx beam determination procedure of a base station, and FIG. 15(a) illustrates a Tx beam sweeping procedure of a UE.

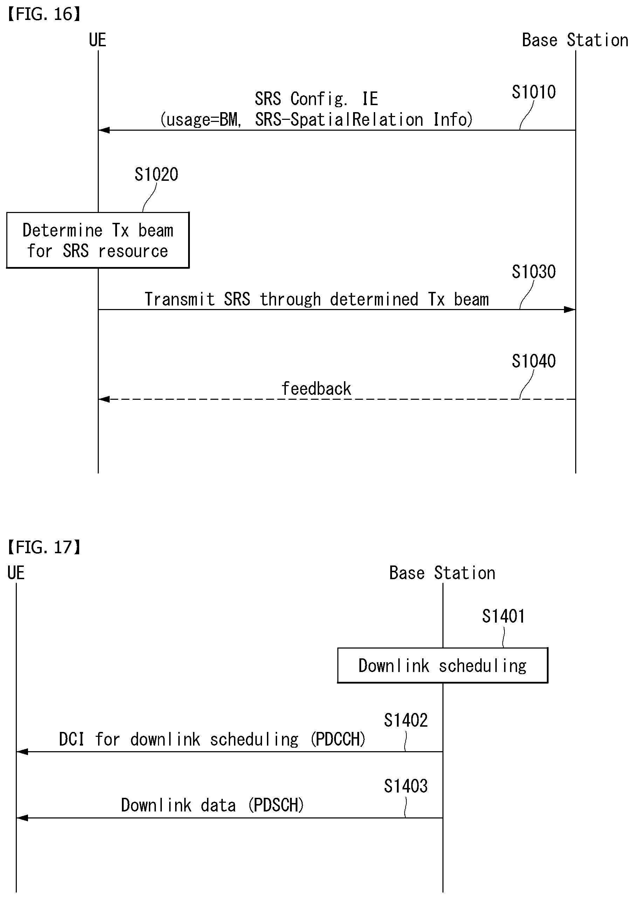

FIG. 16 is a flow chart illustrating an example of an UL BM procedure using a SRS.
- The UE receives, from the base station, RRC signaling (e.g., SRS-Config IE) including (higher layer parameter) usage parameter set to 'beam management' in S1010.

Table 7 represents an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

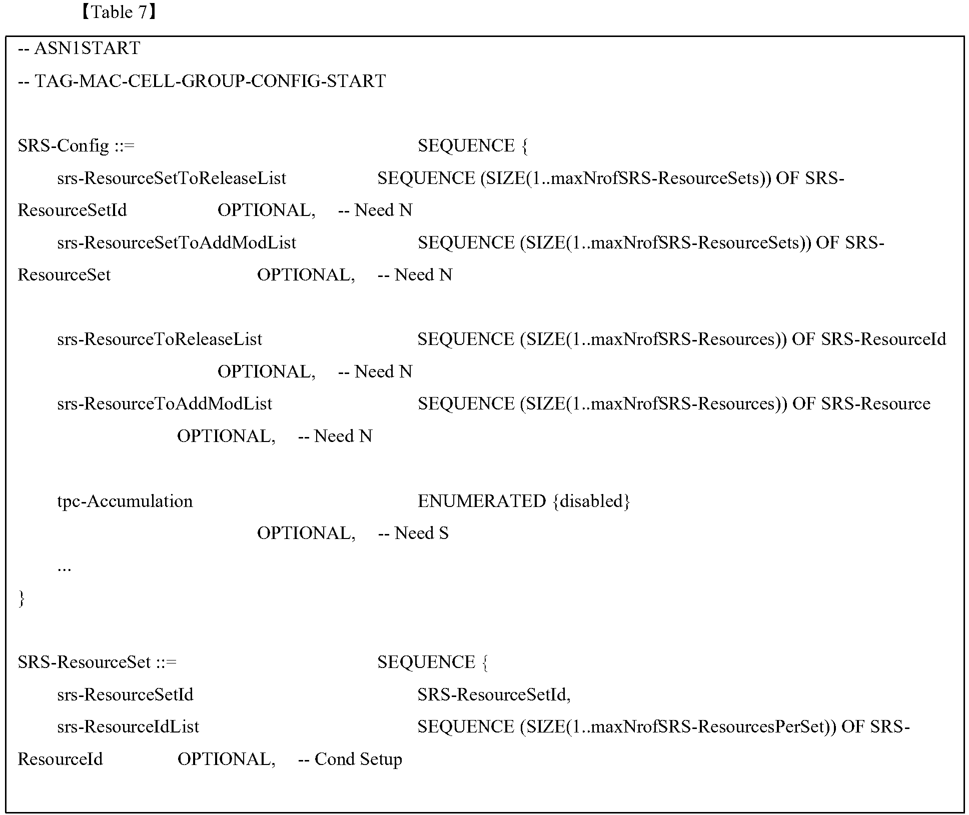

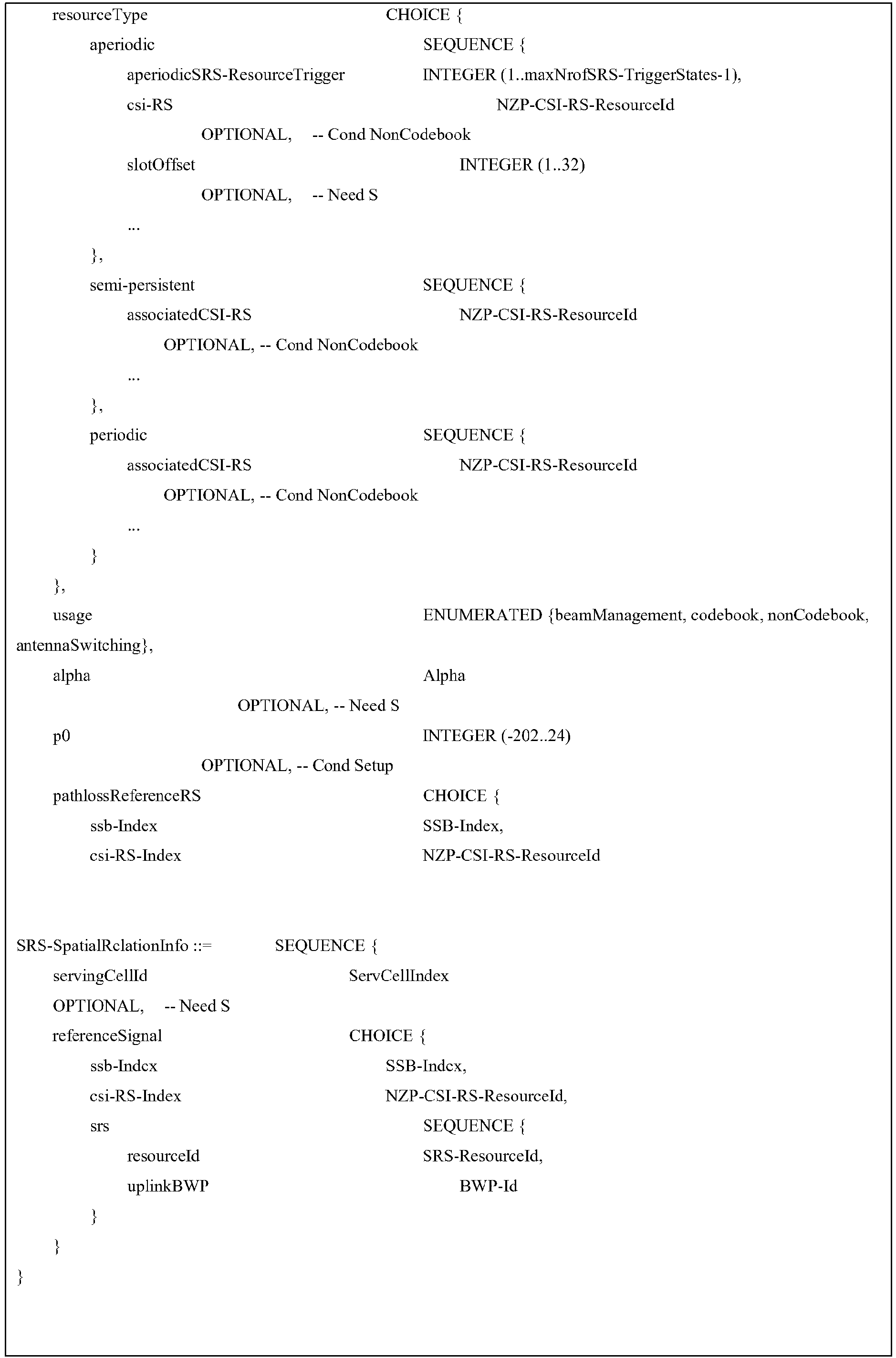

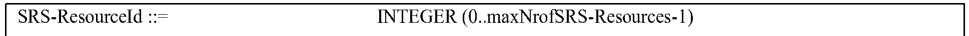

In Table 7, usage refers to a higher layer parameter to indicate whether the SRS resource set is used for beam management or is used for codebook based or non-codebook based transmission. The usage parameter corresponds to L1 parameter 'SRS-SetUse'. 'spatialRelationInfo' is a parameter representing a configuration of spatial relation between a reference RS and a target SRS. The reference RS may be SSB, CSI-RS, or SRS which corresponds to L1 parameter 'SRS-SpatialRelationInfo'. The usage is configured per SRS resource set.
- The UE determines the Tx beam for the SRS resource to be transmitted based on SRS-SpatialRelation Info contained in the SRS-Config IE in S1020. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.
- If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS through the determined Tx beam in S1030.

More specifically, for P-SRS with 'SRS-ResourceConfigType' set to 'periodic':
i) if SRS-SpatialRelationInfo is set to 'SSB/PBCH', the UE transmits the corresponding SRS resource with the same spatial domain transmission filter (or generated from the corresponding filter) as the spatial domain Rx filter used for the reception of the SSB/PBCH; or
ii) if SRS-SpatialRelationInfo is set to 'CSI-RS', the UE transmits the SRS resource with the same spatial domain transmission filter used for the reception of the periodic CSI-RS or SP CSI-RS; or
iii) if SRS-SpatialRelationInfo is set to 'SRS', the UE transmits the SRS resource with the same spatial domain transmission filter used for the transmission of the periodic SRS.

Even if 'SRS-ResourceConfigType' is set to 'SP-SRS' or 'AP-SRS', the beam determination and transmission operations may be applied similar to the above.
- Additionally, the UE may receive or may not receive feedback for the SRS from the base station, as in the following three cases in S1040.
   i) If Spatial_Relation_Info is configured for all the SRS resources within the SRS resource set, the UE transmits the SRS with the beam indicated by the base station. For example, if the Spatial_Relation_Info indicates all the same SSB, CRI, or SRI, the UE repeatedly transmits the SRS with the same beam. This case corresponds to FIG. 15(a) as the usage for the base station to select the Rx beam.
   ii) The Spatial_Relation_Info may not be configured for all the SRS resources within the SRS resource set. In this case, the UE may perform transmission while freely changing SRS beams. That is, this case corresponds to FIG. 15(b) as the usage for the UE to sweep the Tx beam.
   iii) The Spatial_Relation_Info may be configured for only some SRS resources within the SRS resource set. In this case, the UE may transmit the configured SRS resources with the indicated beam, and transmit the SRS resources, for which Spatial_Relation_Info is not configured, by randomly applying the Tx beam.

### Downlink Transmission and Reception Operation

FIG. 17 illustrates an example of downlink transmission and reception operation.
- Referring to FIG. 17, a base station schedules downlink transmission such as frequency/time resource, transmission layer, downlink precoder, and MCS in S1401. In particular, the base station may determine a beam for PDSCH transmission to a UE through the operations described above.
- The UE receives, from the base station, downlink control information (DCI) for downlink scheduling (i.e., including scheduling information of PDSCH) on a PDCCH in S1402.

DCI format 1_0 or 1_1 may be used for downlink scheduling, and the DCI format 1_1 particularly includes the following information: an identifier for DCI formats, a bandwidth part indicator, frequency domain resource assignment, time domain resource assignment, a PRB bundling size indicator, a rate matching indicator, ZP CSI-RS trigger, antenna port(s), a transmission configuration indication (TCI), SRS request, and demodulation reference signal (DMRS) sequence initialization.

In particular, based on each state indicated in an antenna port(s) field, the number of DMRS ports may be scheduled, and single-user (SU)/multi-user (MU) transmission scheduling is also possible.

A TCI field consists of 3 bits, and QCL for DMRS is dynamically indicated by indicating up to 8 TCI states according to a TCI field value.
- The UE receives downlink data from the base station on the PDSCH in S1403.

If the UE detects PDCCH including DCI format 1_0 or 1_1, the UE decodes the PDSCH based on an indication for the DCI.

When the UE receives the PDSCH scheduled by DCI format 1, the UE may be configured with a DMRS configuration type by higher layer parameter 'dmrs-Type', and the DMRS type is used to receive the PDSCH. The UE may also be configured with the maximum number of front-loaded DMRS symbols for the PDSCH by higher layer parameter 'maxLength'

For DMRS configuration type 1, if a single codeword is scheduled and antenna ports mapped to indexes of {2, 9, 10, 11 or 30} are designated, or if two codewords are scheduled, the UE assumes that all remaining perpendicular antenna ports do not associate with PDSCH transmission to another UE.

Alternatively, for DMRS configuration type 2, if a single codeword is scheduled and antenna ports mapped to indexes of {2, 10 or 23} are designated, or if two codewords are scheduled, the UE assumes that all remaining perpendicular antenna ports do not associate with PDSCH transmission to another UE.

When the UE receives the PDSCH, the UE may assume a precoding granularity P' as consecutive resource blocks in the frequency domain, where P' may correspond to one value of {2, 4, wideband}.

If P' is determined as wideband, the UE does not expect to be scheduled with non-contiguous RBs and may assume that the same precoding is applied to assigned resources.

On the other hand, if P' is determined as one of {2, 4}, a precoding resource block group (PRG) is divided into P' consecutive PRBs. The number of actually consecutive PRBs in each PRG may be one or more. The UE may assume that the same precoding is applied to consecutive downlink PRBs in the PRG.

In order for the UE to determine a modulation order, a target code rate, and a transport block size within the PDSCH, the UE first reads 5-bit MCD field within DCI and determines the modulation order and the target code rate. Further, the UE reads a redundancy version field within the DCI and determines a redundancy version. The UE determines the transport block size using the number of layers and the total number of assigned PRBs before the rate matching.

### Uplink Transmission and Reception Operation

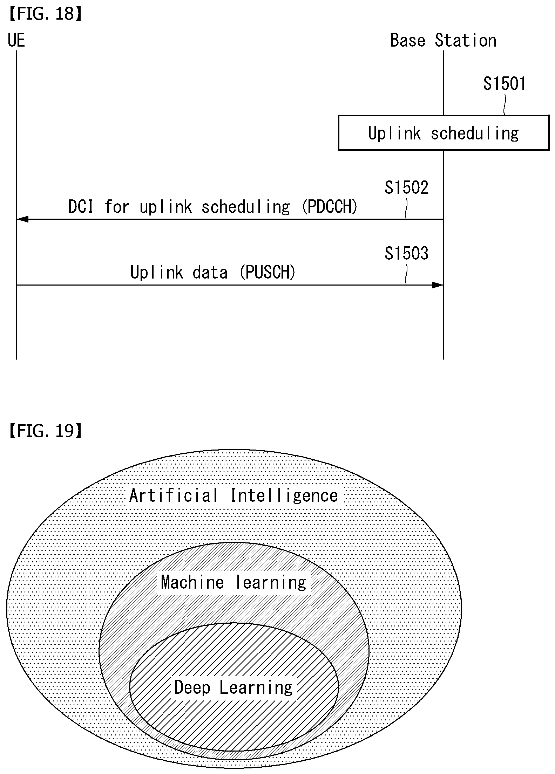

FIG. 18 illustrates an example of uplink transmission and reception operation.
- Referring to FIG. 18, a base station schedules uplink transmission such as frequency/time resource, transmission layer, uplink precoder, and MCS in S1501. In particular, the base station may determine a beam for PUSCH transmission to a UE through the operations described above.
- The UE receives, from the base station, DCI for uplink scheduling (i.e., including scheduling information of PUSCH) on a PDCCH in S1502.

DCI format 0_0 or 0_1 may be used for uplink scheduling, and the DCI format 0_1 particularly includes the following information: an identifier for DCI formats, UL/SUL (supplementary uplink) indicator, a bandwidth part indicator, frequency domain resource assignment, time domain resource assignment, a frequency hopping flag, a modulation and coding scheme (MCS), a SRS resource indicator (SRI), precoding information and number of layers, antenna port(s), SRS request, DMRS sequence initialization, and an uplink shared channel (UL-SCH) indicator.

In particular, SRS resources configured within a set of SRS resources associated with higher layer parameter 'usage' by a SRS resource indicator field may be indicated. 'spatialRelationInfo' may be configured for each SRS resource, and this value may be one of {CRI, SSB, SRI}.
- The UE transmits uplink data to the base station on the PUSCH in S1503.

If the UE detects PDCCH including the DCI format 0_0 or 0_1, the UE transmits the corresponding PUSCH based on an indication by the DCI.

Two types of transmission methods including codebook based transmission and non-codebook based transmission are supported for PUSCH transmission:
i) When higher layer parameter 'txConfig' is set to 'codebook', the UE is configured with the codebook based transmission. On the other hand, when the higher layer parameter 'txConfig' is set to 'nonCodebook', the UE is configured with the non-codebook based transmission. If the higher layer parameter 'txConfig' is not set, the UE does not expect to be scheduled by the DCI format 0_1. If the PUSCH is scheduled by the DCI format 0_0, the PUSCH transmission is based on a single antenna port.
   For the codebook based transmission, the PUSCH may be scheduled in the DCI format 0_0, the DCI format 0_1, or semi-statically. If this PUSCH is scheduled by the DCI format 0_1, the UE determines a PUSCH transmission precoder based on an SRI from DCI, a transmit precoding matrix indicator (TPMI), and a transmission tank, as given by a SRS resource indicator field and a field of precoding information and number of layers. The TPMI is used to indicate a precoder that may be applied over an antenna port, and corresponds to SRS resource selected by the SRI when multiple SRS resources are configured. Alternatively, if a single SRS resource is configured, the TPMI is used to indicate a precoder that may be applied over an antenna port, and corresponds to the corresponding single SRS resource. A transmission precoder is selected from an uplink codebook having the same number of antenna ports as upper layer parameter 'nrofSRS-Ports'. When the UE is configured with the higher layer parameter 'txConfig' set to 'codebook', at least one SRS resource is configured to the UE. A SRI indicated in a slot n is associated with the latest transmission of SRS resource identified by the SRI, where the SRS resource precedes the PDCCH (i.e., slot n) carrying the SRI.
ii) For the non-codebook based transmission, the PUSCH may be scheduled in the DCI format 0_0, the DCI format 0_1, or semi-statically. When multiple SRS resources are configured, the UE may determine a PUSCH precoder and a transmission tank based on a wideband SRI, where the SRI is given by an SRS resource indicator within DCI, or given by upper layer parameter 'srs-ResourceIndicator'. The UE uses one SRS resource or multiple SRS resources for the SRS transmission, where the number of SRS resources may be configured for the simultaneous transmission within the same RB based on a UE capability. Only one SRS port is configured for each SRS resource. Only one SRS resource may be configured with the upper layer parameter 'usage' that is set to 'nonCodebook'. The maximum number of SRS resources that can be configured for the non-codebook based uplink transmission is 4. A SRI indicated in a slot n is associated with the latest transmission of SRS resource identified by the SRI, where the SRS transmission precedes the PDCCH (i.e., slot n) carrying the SRI.

### Artificial Intelligence (AI) Operation

With the technological advancement of artificial intelligence/machine learning (AI/ML), the node(s) and UE(s) that form the wireless communication network are becoming more intelligent/advanced. In particular, due to the intelligence of networks/base stations, it is expected that it will be possible to quickly optimize and derive/apply various network/base station decision parameter values (e.g. transmission/reception power of each base station, transmission power of each UE, precoder/beam of base station/UE, time/frequency resource allocation for each UE, duplex method of each base station, etc.) according to various environmental parameters (e.g. distribution/location of base stations, distribution/location/material of buildings/furniture, etc., location/movement direction/speed of UEs, climate information, etc.). In line with this trend, many standardization organizations (e.g. 3GPP, O-RAN) are considering introduction, and studies on this are also actively underway.

AI/ML can be conceptually broadly divided as shown in FIG. 19.

Machine Learning (ML): refers to a technology in which machines learn patterns for decision-making from data on their own without explicitly programming rules.

Deep Learning: is an artificial neural network-based model, and allows machines to perform feature extraction and judgment from unstructured data at once. The algorithm relies on a multi-layer network consisting of interconnected nodes for feature extraction and transformation, inspired by the biological nervous system, or Neural Network. Common deep learning network architectures include deep neural networks (DNNs), recurrent neural networks (RNNs), and convolutional neural networks (CNNs), etc.

AI (or referred to as AI/ML): It can be referred to as deep learning-based artificial intelligence in a narrow sense, but is not limited to this in the present disclosure. That is, in the present disclosure, AI (or AI/ML) may collectively refer to automation technologies applied to intelligent machines (e.g. UE, RAN, network nodes, etc.) that can perform tasks like humans.

### [AI/ML classification method]

### 1. Classification according to online/offline

### a) Offline Learning

Offline learning follows a sequential procedure of database collection, learning, and prediction. In other words, collection and learning can be performed offline, and the completed program can be installed in the field and used for prediction work. Offline learning is where the system does not learn incrementally, the learning is performed using all available collected data and applied to the system without further learning. If learning about new data is necessary, learning can begin again using all new data.

### b) Online Learning

This refers to a method of gradually improving performance by incrementally learning with additional data generated in real time, taking advantage of the fact that data that can be used for recent learning is continuously generated through the Internet. Learning is performed in real time for each (bundle) of specific data collected online, allowing the system to quickly adapt to changing data.

Only online learning is used to build an AI system, so learning may be performed only with data generated in real time, or after offline learning is performed using a predetermined data set, additional learning may be performed using additional real-time data (online + offline learning).

### 2. Classification according to AI/ML Framework concept

### a) Centralized Learning

In centralized learning, when training data collected from multiple different nodes is reported to a central node, all data resources/storage/learning (e.g. supervised learning, unsupervised learning, reinforcement learning, etc.) are performed in one centralized node.

### b) Federated Learning

Federated learning is built on data whose a collective model exists across distributed data owners. Instead of collecting data into a model, AI/ML models are imported into a data source, allowing local nodes/individual devices to collect data and train their own copies of the model, so there is no need to report source data to a central node. In federated learning, the parameters/weights of an AI/ML model can be sent back to the centralized node to support general model training. Federated learning has advantages in terms of increase in computation speed and information security. That is, a process of uploading personal data to a central server is unnecessary, and leakage and misuse of personal information can be prevented.

### c) Distributed Learning

Distributed learning refers to a concept where machine learning processes are scaled and distributed across a cluster of nodes. Training models are shared across multiple nodes split and operating simultaneously to speed up model training.

### 3. Classification according to learning method

### a) Supervised Learning

Supervised learning is a machine learning task that aims to learn a mapping function from input to output, given a labeled data set. The input data is called training data and has known labels or results. An example of supervised learning is as follows.
- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting labels and regression is predicting quantities.

### b) Unsupervised Learning

Unsupervised learning is a machine learning task that aims to learn functions that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

### c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.
- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.
- Model-based reinforcement learning: refers to an RL algorithm that uses a predictive model. The transition probabilities between states are obtained using various dynamic states of the environment and a model in which these states lead to rewards.
- Model-free reinforcement learning: refers to a RL algorithm based on value or policy that achieves the maximum future reward. Multi-agent environments/states are computationally less complex and do not require an accurate representation of the environment.

Additionally, RL algorithms can also be classified into value-based RL vs. policy-based RL, policy-based RL vs. non-policy RL, etc.

### [Deep Learning representative model]

Next, representative deep learning models are explained.

### 1. Feed-Forward Neural Network

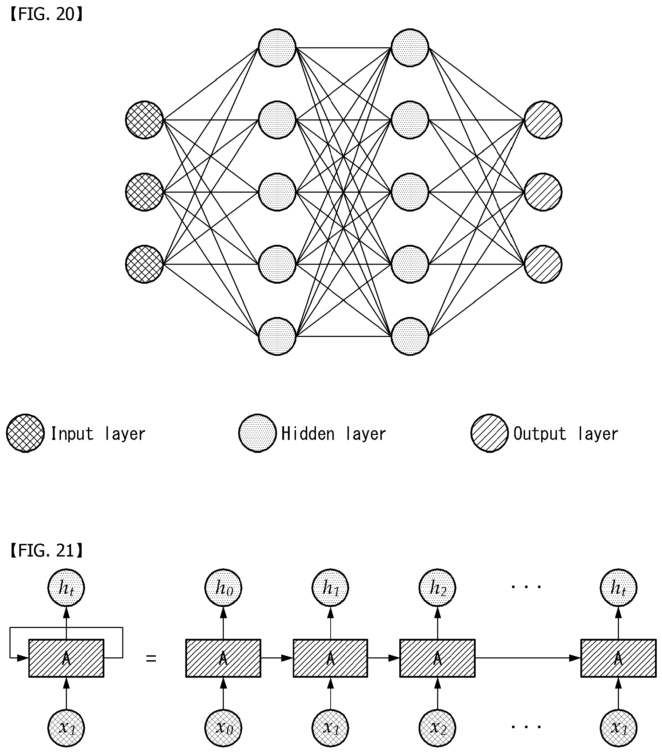

FIG. 20 illustrates a feed-forward neural network.

A feed-forward neural network (FFNN) consists of an input layer, a hidden layer, and an output layer.

In FFNN, information is transmitted only from the input layer to the output layer, and if there is a hidden layer, it passes through it.

### 2. Recurrent Neural Network

FIG. 21 illustrates a recurrent neural network.

Recurrent neural network (RNN) is a type of artificial neural network in which hidden nodes are connected to directed edges to form a directed cycle. This model is suitable for processing data that appears sequentially, such as voice and text.

In FIG. 21, A represents a neural network, xt represents an input value, and ht represents an output value. Here, ht may mean a state value representing the current state based on time, and ht-1 may represent a previous state value.

One type of RNN is Long Short-Term Memory (LSTM), which is a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

### 3. Convolutional Neural Network

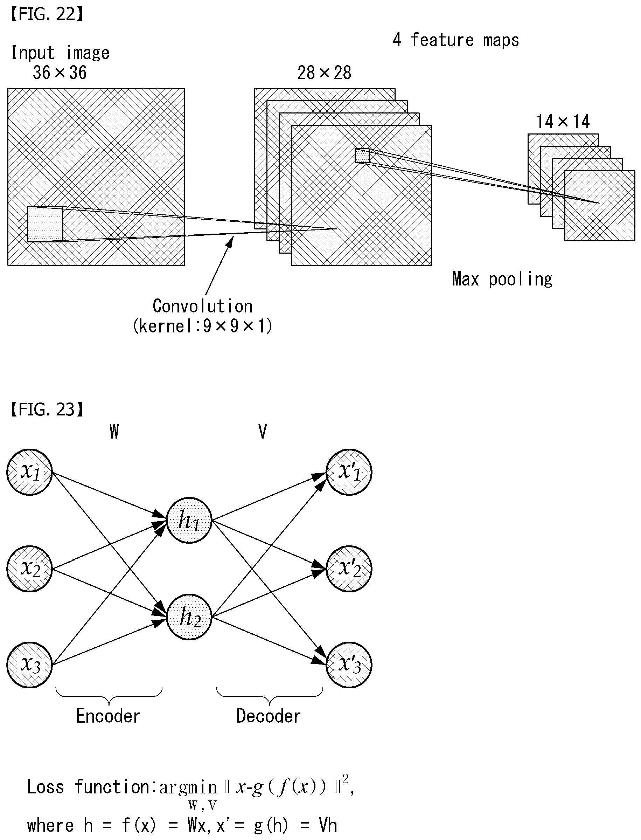

FIG. 22 illustrates a convolutional neural network.

Convolutional neural networks (CNN) are used for two purposes: reducing model complexity and extracting good features by applying convolution operations commonly used in image processing or image processing fields.
- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying kernel to input. Several feature maps can be extracted to encourage them to be resilient to distortion, change, etc.
- Padding: refers to a value added to adjust the size of the feature map.
- Pooling: refers to an operation to reduce the size of the feature map by downsampling the feature map (e.g. max pooling, average pooling).

### 4. Auto Encoder

FIG. 23 illustrates an auto encoder.

Auto encoder refers to a neural network that receives a feature vector x (x1, x2, x3, ...) as input and outputs the same or similar vector x'(x'1, x'2, x'3, ...)'.

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 23 is calculated based on the difference between input and output, and based on this, identifies the degree of loss of input and an optimization process is performed in the auto encoder to minimize the loss.

### [Split AI Inference]

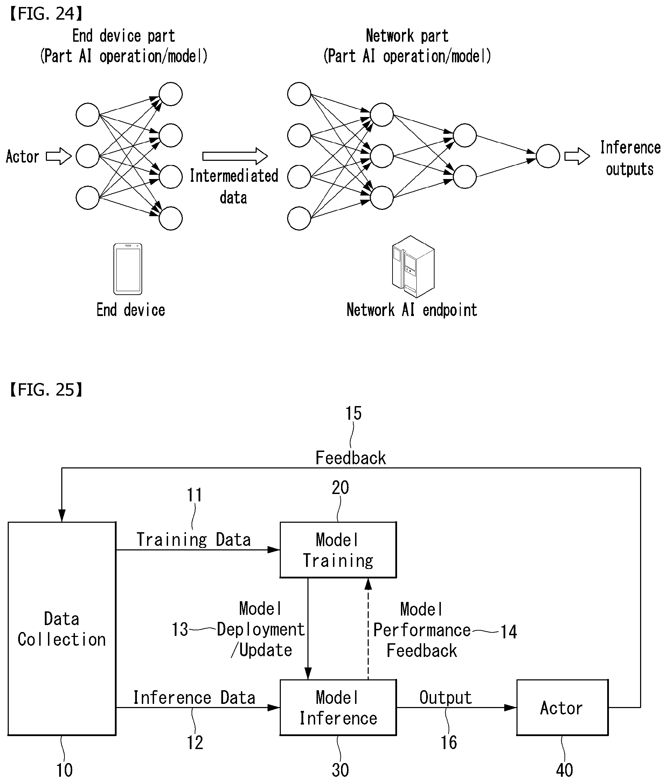

FIG. 24 is a diagram illustrating split AI inference.

FIG. 24 illustrates a case where, among split AI operations, the Model Inference function is performed by collaboration in an end device such as a UE and a network AI/ML endpoint.

In addition to the Model Inference function, each of Model Training function, Actor, and Data Collection function is split into multiple parts depending on the current task and environment, and can be performed through collaboration between multiple entities.

For example, computation-intensive and energy-intensive parts may be performed at the network endpoint, while personal information-sensitive parts and delay-sensitive parts may be performed at the end device. In this case, the end device can execute a task/model from input data to a specific part/layer and then transmit intermediate data to a network endpoint. The network endpoint executes the remaining parts/layers and provides the result of inference outputs to one or more devices that perform the operation/task.

### [Functional Framework]

Next, the functional framework for AI operation is described.

Hereinafter, for a more specific explanation of AI (or AI/ML), terms can be defined as follows.
- Data collection: Data collected from network nodes, management entities, or UEs, etc. based on AI model training, data analysis, and inference.
- AI Model: A data driven algorithm applying AI technology that generates a set of outputs containing prediction information and/or decision parameters based on a set of inputs.
- AI/ML Training: Online or offline process of training an AI model by learning features and patterns to best represent data and obtain trained AI/ML models for inference.
- AI/ML Inference: Process of making predictions or leading to decisions based on the data collected using the trained AI model and the AI model.

FIG. 25 is a diagram illustrating a functional framework for AI operation. Referring to FIG. 25, the data collection function 10 is a function that collects input data and provides processed input data to the model training function 20 and the model inference function 30.

Examples of input data may include measurements from UEs or other network entities, feedback from actors, and output of AI models.

Data Collection function 10 performs data preparation based on input data and provides input data processed through the data preparation. Here, the Data Collection function (10) does not perform specific data preparation (e.g. data pre-processing and cleaning, formatting and transformation) for each AI algorithm, and can perform data preparation common to AI algorithms.

After performing the data preparation process, the Data Collection function 10 provides Training Data 11 to the Model Training function 20 and Inference Data 12 to the Model Inference function 30. Here, Training Data 11 is data required as input for the AI Model Training function 20. Inference Data 12 is data required as input for the AI Model Inference function 30.

The Data Collection function 10 may be performed by a single entity (e.g. UE, RAN node, network node, etc.), but may also be performed by a plurality of entities. In this case, Training Data 11 and Inference Data 12 may be provided from the plurality of entities to the Model Training function 20 and the Model Inference function 30, respectively.

The Model Training function 20 is a function that performs AI model training, validation, and testing that can generate model performance metrics as part of the AI model testing procedure. If necessary, the Model Training function 20 is also responsible for data preparation (e.g. data pre-processing and cleaning, forming and transformation) based on the Training Data 11 provided by the Data Collection function 10.

Here, Model Deployment/Update 13 is used to initially deploy the trained, verified, and tested AI model to the Model Inference function 30 or provide the updated model to the Model Inference function 30.

Model Inference function 30 is a function that provides AI model inference output 16 (e.g. prediction or decision). If applicable, the Model Inference function 30 can provide Model Performance Feedback 14 to the Model Training function 20. In addition, the Model Inference function 30 is also responsible for data preparation (e.g. data pre-processing and cleaning, forming and transformation) based on the Inference Data 12 provided by the Data Collection function 10, if necessary.

Here, Output 16 refers to the inference output of the AI model generated by the Model Inference function 30, and the details of the inference output may vary depending on the use case.

Model Performance Feedback 14 can be used to monitor the performance of the AI model, if available, and this feedback can also be omitted.

The Actor function 40 is a function that receives the output 16 from the Model Inference function 30 and triggers or performs the corresponding task/action. Actor function 40 may trigger tasks/actions on other entities (e.g. one or more UEs, one or more RAN nodes, one or more network nodes, etc.) or on itself.

Feedback 15 can be used to derive Training data 11, Inference data 12, or to monitor the performance of the AI Model and its impact on the network.

Meanwhile, the definitions of training/validation/test in the data set used in AI/ML can be divided as follows.
- Training data: refers to a data set for learning a model.
- Validation data: refers to a data set for verifying a model for which learning has already been completed. In other words, it usually refers to a data set used to prevent over-fitting of the training data set.

It also refers to a data set for selecting the best among various models learned during the learning process. Therefore, it can also be viewed as a type of learning.
- Test data: refers to a data set for final evaluation. This data is unrelated to learning.

In the case of the above data set, if the training set is generally divided, the training data and validation data within the entire training set can be divided into about 8:2 or 7:3, and if the test is also included, it can be divided into 6:2:2 (training: validation: test).

Depending on the capability of the AI/ML function between the base station and the UE, the collaboration level can be defined as follows, and variations due to the combination of the following plural levels or the separation of any one level are also possible.

Cat 0a) No collaboration framework: AI/ML algorithms are purely implementation-based and do not require any air interface changes.

Cat 0b) This level corresponds to a framework that involves a modified air interface for efficient implementation-based AI/ML algorithms, but without collaboration.

Cat 1) This involves inter-node support to improve the AI/ML algorithm of each node. This applies if the UE receives support from a gNB (for training, adaptation, etc.) and vice versa. At this level, model exchange between network nodes is not required.

Cat 2) Joint ML tasks between the UE and gNB may be performed. This level requires AI/ML model commands or exchanges between network nodes.

The functions previously illustrated in FIG. 25 may be implemented in a RAN node (e.g. a base station, a TRP, a central unit (CU) of a base station, etc.), a network node, an operation administration maintenance (OAM) of a network operator, or a UE.

Alternatively, the function illustrated in FIG. 25 may be implemented through collaboration between two or more entities among the RAN, network node, OAM of the network operator, or UE. For example, one entity may perform some of the functions of FIG. 25 and another entity may perform the remaining functions. As such, as some of the functions illustrated in FIG. 25 are performed by a single entity (e.g. UE, RAN node, network node, etc.), delivery/provision of data/information between each function is omitted. For example, if the Model Training function 20 and the Model Inference function 30 are performed by the same entity, the delivery/provision of Model Deployment/Update 13 and Model Performance Feedback 14 can be omitted.

Alternatively, any one of the functions illustrated in FIG. 25 may be performed through collaboration between two or more entities among the RAN, network node, OAM of the network operator, or UE. This can be referred to as a split AI operation.

### 1. AI Model Training Function (Network Node) - AI Model Inference Function (RAN Node)

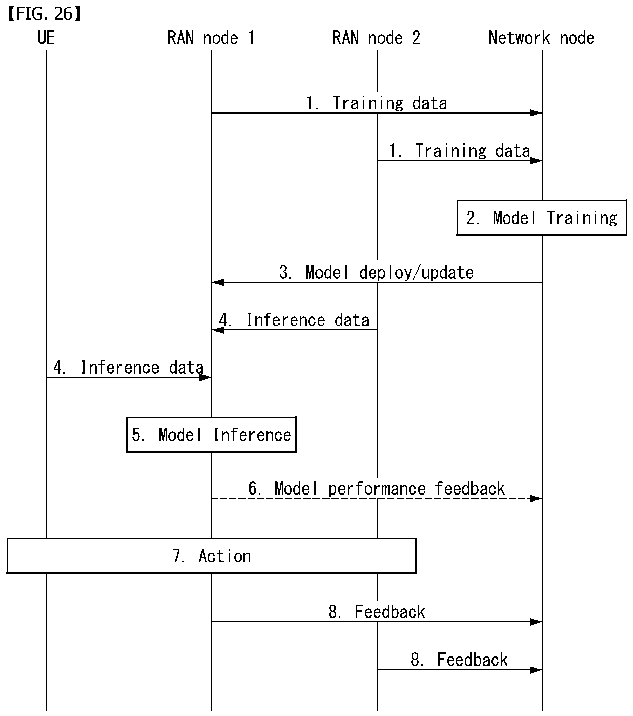

FIG. 26 illustrates AI operations performed by a UE, RAN nodes, and network nodes. That is, FIG. 26 illustrates a case where the AI Model Training function is performed by a network node (e.g. core network node, OAM of the network operator, etc.) and the AI Model Inference function is performed by a RAN node (e.g. base station, TRP, CU of base station, etc.).

Step 1: RAN Node 1 and RAN Node 2 transmit input data (i.e. Training data) for AI Model Training to the network node. Here, RAN node 1 and RAN node 2 can transmit data collected from the UE (e.g. measurements of the UE related to RSRP, RSRQ, SINR of the serving cell and neighboring cells, location of the UE, speed, etc.) to the network node together.

Step 2: The network node trains the AI Model using the received training data.

Step 3: The network node deploys/updates the AI Model to RAN Node 1 and/or RAN Node 2. RAN Node 1 (and/or RAN Node 2) may continue to perform model training based on the received AI Model.

For convenience of explanation, it is assumed that the AI Model has been deployed/updated only to RAN Node 1.

Step 4: RAN Node 1 receives input data (i.e. Inference data) for AI Model Inference from UE and RAN Node 2.

Step 5: RAN Node 1 performs AI Model Inference using the received Inference data to generate output data (e.g. prediction or decision).

Step 6: If applicable, RAN Node 1 may transmit model performance feedback to the network node.

Step 7: RAN node 1, RAN node 2, and UE (or 'RAN node 1 and UE', or 'RAN node 1 and RAN node 2') perform an action based on the output data. For example, in the case of load balancing operation, the UE may move from RAN node 1 to RAN node 2.

Step 8: RAN node 1 and RAN node 2 transmit feedback information to the network node.

### 2. AI Model Training/Inference Function: RAN node

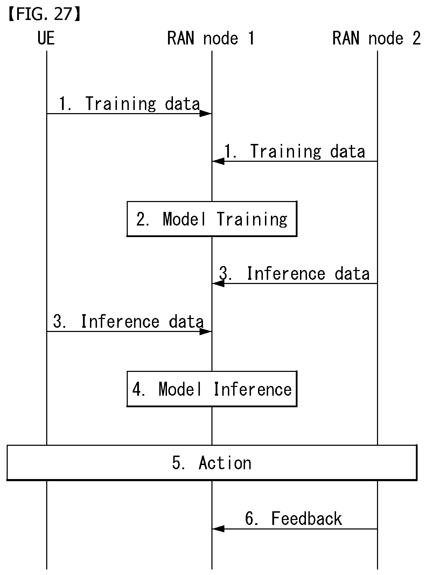

FIG. 27 illustrates AI operations performed by the UE and RAN nodes. That is, FIG. 27 illustrates a case where both the AI Model Training function and the AI Model Inference function are performed by a RAN node (e.g. base station, TRP, CU of the base station, etc.).

Step 1: UE and RAN Node 2 transmit input data (i.e. Training data) for AI Model Training to RAN Node 1.

Step 2: RAN Node 1 trains the AI Model using the received training data.

Step 3: RAN Node 1 receives input data (i.e. Inference data) for AI Model Inference from UE and RAN Node 2.

Step 4: RAN Node 1 performs AI Model Inference using the received Inference data to generate output data (e.g. prediction or decision).

Step 5: RAN node 1, RAN node 2, and UE (or 'RAN node 1 and UE', or 'RAN node 1 and RAN node 2') perform an action based on the output data. For example, in the case of load balancing operation, the UE may move from RAN node 1 to RAN node 2.

Step 6: RAN node 2 transmits feedback information to RAN node 1.

### 3. AI Model Training Function (RAN Node) - AI Model Inference Function (UE)

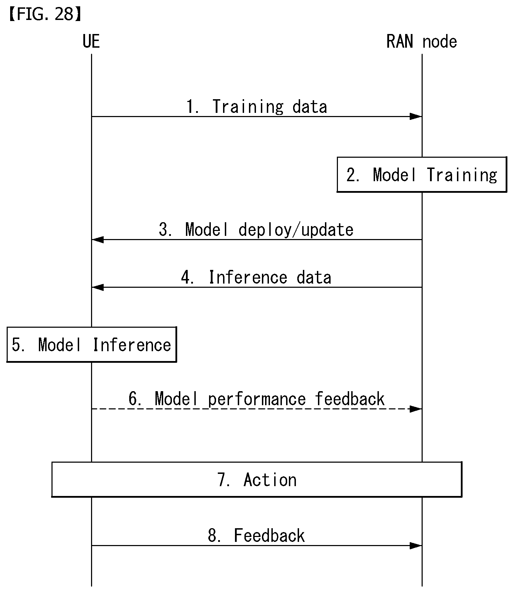

FIG. 28 illustrates AI operations performed by a UE and a RAN node. That is, FIG. 28 illustrates a case where the AI Model Training function is performed by a RAN node (e.g. base station, TRP, CU of the base station, etc.), and the AI Model Inference function is performed by the UE.

Step 1: The UE transmits input data (i.e. Training data) for AI Model Training to the RAN node. Here, the RAN node may collect data (e.g. measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node deploys/updates the AI Model to the UE. The UE may continue to perform model training based on the received AI Model.

Step 4: receive input data (i.e. Inference data) for AI Model Inference from the UE and RAN node (and/or from another UE).

Step 5: The UE performs AI Model Inference using the received Inference data to generate output data (e.g. prediction or decision).

Step 6: If applicable, the UE may transmit model performance feedback to the RAN node.

Step 7: UE and RAN node perform actions based on output data.

Step 8: The UE transmits feedback information to the RAN node.

The contents discussed above (e.g. 3GPP system, frame structure, NR system, AI operation, etc.) can be applied in combination with the methods proposed in the present disclosure, which will be described later. And/or, the contents discussed above can be supplemented to clarify the technical features of the methods proposed in the present disclosure.

In the present disclosure, '/' means 'and', 'or', or 'and/or' depending on the context.

In the downlink (DL) beam management procedure of the UE, the UE measures a beam forming signal received from the base station and performs a beam reporting operation to report the measurement result to the base station. And/or, when beam reporting, the UE may report beam information on a plurality of N beams related to the DL best beam. In the present disclosure, the beam reporting may refer to the operation of reporting beam information or beam information (e.g. all information related to beam reporting). For example, the beam reporting may include preferred downlink reference signal identifier(s) (DL RS ID(s)) and quality values corresponding thereto. For example, the quality value may be layer 1-reference signal received power (L1-RSRP), and/or layer 1-signal to interference plus noise ratio (L1-SINR). In this regard, the beam management procedure/beam decision process, etc. of FIGS. 8 to 14 may be referred to.

The beam reporting in the current standardization stage refers to reporting beam quality results for an instantaneous specific location of the UE or wireless channel environment to the base station. Accordingly, if the location of the UE is changed considering the mobility of the UE, the reported best beam information may be different from the information at the time of the beam reporting, which may cause performance degradation in terms of beam quality between the base station and the UE. Considering this, there may be a way to perform beam measurement/beam reporting more frequently, but it cannot be a fundamental solution due to problems such as increased signaling overhead and latency occur.

To solve this problem, the mobility of the UE needs to be reflected in a time-varying pattern for the movement path and time spent at a specific location for the location from the UE's perspective considering the UE-initiated property. To this end, the UE may perform a reporting operation including related information when the beam reporting based on mobility-related prediction information (through AI/ML, etc.). Through this, best beam switching/best panel switching according to UE location change and UE operation pattern and beam management operation considering the corresponding beam/panel application time point can be performed or designed. Through this, not only can a reduction effect in signaling overhead and beam management latency be expected, but also high beam quality can be maintained for mobility UEs.

Hereinafter, the present disclosure proposes a method of enhanced beam reporting by the UE based on prediction information of UE mobility (via AI/ML).

More specifically, the present disclosure proposes a method of reporting beam information predicted for a future time point (hereinafter referred to as the first embodiment), and a method of reporting the switching time and corresponding beam information for each beam/panel to be applied when changing/updating a beam (hereinafter referred to as the second embodiment).

Hereinafter, the embodiments described in the present disclosure are divided only for convenience of explanation and it goes without saying that some methods and/or components of an embodiment may be replaced with methods and/or components of another embodiment, or may be applied in combination with each other.

Slots, subframes, frames, etc. mentioned in the embodiments described in the present disclosure may correspond to specific examples of certain time units used in a wireless communication system. That is, when applying the methods proposed in the present disclosure, time units, etc. may be applied and replaced with other time units applied in another wireless communication system.

In the present disclosure, L1 signaling may mean DCI-based dynamic signaling between the base station and the UE, and L2 signaling may mean higher layer signaling based on radio resource control (RRC)/medium access control-control elements (MAC-CE) between the base station and the UE.

First, a first embodiment is examined.

### First embodiment

In the first embodiment, a method of reporting beam information predicted for a future time point is examined.

Hereinafter, the embodiments described below are divided only for convenience of explanation and it goes without saying that the configuration of one method may be replaced with the configuration of another method, or may be applied in combination with each other.

When reporting one or more N best beams, the UE can report/transmit beam reporting information including information about the beam(s) predicted (considering the UE mobility) for the future (via AI/ML method). In other words, the present embodiment may mean predicting the movement path of the UE (based on AI/ML) and configuring a beam reporting including beam quality for when the UE moves in a specific direction instead of configuring the best N beam information based on the beam quality at the current location/time point.

For example, AI/ML can learn movement patterns and/or future movement paths/locations for the UE's location/movement path and time spent at a specific location. For example, AI/ML can learn the (received) RS and/or the quality value of the RS at the current time and/or location of the UE, and/or, the quality value of the RS at a future time and/or location with respect thereto, and/or, the movement path (over time) of the UE, etc. For example, the learning operation may be performed in the model training function 20 (or model training unit) of FIG. 25. And/or, AI/ML may receive as input the (received) RS and/or the quality value of the RS at the current time and/or location of the UE, and predict/infer/output RS, quality value of RS, and/or probability of being the best beam, etc., at future movement paths (over time) and/or at future time points and/or locations. For example, the prediction operation may be performed in the model inference function 30 (or model inference unit) of FIG. 25. For example, learning/prediction/inference operations based on AL/ML can be performed through cooperation between the UE and the base station, as described in FIGS. 26 to 28.

Since the above-described learning/prediction operation is an example, the learning/prediction operation may be performed in various ways. 'AI/ML' in the present disclosure may mean artificial intelligence (AI), machine learning (ML), and/or deep learning (DL). More detailed description/operation related to AI/ML may refer to the contents of FIGS. 19 to 28.

For example, the UE can report probability information that N beam(s) including the best quality beam will change to the best beam (due to UE mobility) and/or beam reporting information including the corresponding preferred DL RS ID/panel ID. The 'beam reporting information' of the present disclosure may also be referred to as 'beam information'. The beam quality may be different when considering mobility based on the currently measured DL RS ID(s), and among these, the best beam may change to a specific DL RS ID(s). To include this, the UE can report including information about the probability that the current best beam will change to another beam. For example, when N=4 and DL RS ID(s) (e.g. CSI-RS#1/#2/#3/#4) and L1-RSRP are sorted in descending order based on beam quality, P={ p1, p2, p3, p4} may mean the probability of being the best beam in the next instance considering mobility. That is, if P={0, 0.5, 0.3, 0.2}, this may mean that the probability of changing to the beam direction corresponding to CSI-RS#2 is highest. At this time, the granularity for the corresponding probability value may use a preconfigured value or may be a value specified by the base station. When the base station receives information about P={0, 0.5, 0.3, 0.2} the base station can configure/instruct the UE to receive downlink based on the beam/beam direction corresponding to CSI-RS#2, and the UE can receive downlink based on the beam/beam direction corresponding to CSI-RS#2.

And/or, the UE may report both beam reporting information at the current time and beam reporting information at the future time. For example, beam reporting information may include information about beams for a plurality of instances as well as the current time. For example, the UE may report the RS ID(s) and quality value(s) corresponding to the beam(s) for each of the plurality of instances.

And/or, beam/panel related information for a plurality of time instances (or instances) considering mobility may be included and reported in beam reporting information.

'instance' in the present disclosure may mean a time point corresponding to each of a plurality of beam information (or beam reporting information) to be reported. The corresponding time point may be a current time point and/or a specific time point in the future. For example, instance may be a reception time point of an RS to be measured, a measurement time point of a received RS, and/or a specific time point for predicting beam information. For example, the instance may be configured by the base station, or may mean a predefined/promised time point between the base station and the UE. For example, the instance may refer to not only a time point when beam reporting is performed including the corresponding quality value after receiving the DL RS ID(s) measured by the UE, but also a specific time point in the future when beam reporting is performed by predicting the quality value of the corresponding DL RS ID(s) or a different DL RS ID(s) at a specific time point in the future. For example, if the quality value measurement time point performed during existing beam reporting is instance#0, after that, the specific time point after X ms/slots can be instance#1, and Y ms/slots time point after instance#1 can be instance#2. At this time, based on instance#0, the quality prediction value of the corresponding DL RS ID(s) for the time point after X ms/slots and the time point after X+Y ms/slots can be calculated based on AI/ML, and the UE can report beam information including the corresponding quality prediction value to the base station.

At this time, the DL RS ID(s) and related quality values L1-RSRP/L1-SINR for each specific instance may be reported separately. That is, X1 CSI-RS resource indicator (CRI)(s)/synchronization signal block resource indicator (SSBRI)(s) and RSRP(s)/SINR(s) for instance#1, and X2 CRI(s)/SSBRI(s) and RSRP(s)/SINR(s) for instance#2 may be reported. The 'synchronization signal block' of the present disclosure can be applied instead of a synchronization signal/physical broadcast channel block (SS/PBCH block). That is, X1+X2 DL RS ID(s) and related quality values can be reported.

And/or, X2 CRI(s)/SSBRI(s) and RSRP(s)/SINR(s) may be reported as a differential value for CRI(s)/SSBRI(s) and RSRP(s)/SINR(s) of instance#1. For example, if the CRI of instance#2 is the same CRI as instance#1, the operation can be performed by omitting the corresponding information or reporting a specific bit stream (e.g. all zeros) in the corresponding bit field. And/or, the UE may send X1 CRI(s)/SSBRI(s) and RSRP(s)/SINR(s) for instance#1 and separately report the corresponding X1 RSRP(s)/SINR(s) quality change prediction values for instance#1. At this time, X1 and X2 may be values configured by the base station, and defined as X1=X2 and applied to a plurality of instances (e.g. X1, X2, X3, X4...).

And/or, both the DL RS ID/panel ID and the corresponding quality value for each instance may be included and reported and/or, a differential value based on a specific instance may be included and reported in beam reporting information.

And/or, if the base station specifies a reference time, the UE can perform beam reporting according to the reference time. In other words, if the base station specifies/configures a reference time or time period, beam reporting can be performed according to the reference time or time period. For example, if a measured value based on the reception time point of CSI-RS/SSB is specified as the reference time or the predicted value is specified based on the time point after a specific M slots/msec, beam reporting can be performed according to the corresponding reference time. For example, the reference time may be a channel state information-reference signal (CSI-RS)/synchronization signal block (SSB) reception time point. Alternatively, the reference time may be after M slots/msec. For example, the reference time may be after M slots/msec from the time of CSI-RS/SSB reception. For example, the UE can report the measured value based on the time point of the CSI-RS/SSB reception or the predicted value based on the time point after M slots/msec. For example, it can be reference time=instance#0=TO, instance#1=T0+X, instance#2=T0+2X... Alternatively, it can be reference time=TO, instance#0=T0+X, instance#1=T0+2X, instance#2=T0+3X... Here, X may be a time interval between preconfigured instances.

And/or, if the base station specifies a plurality of reference times (or time period) for the corresponding reference time, the UE can perform beam reporting for each time and if the base station specifies a future time point, it can report future beam values. In the reporting mode for the above methods, the number of single/plural time instances related to future time point and the corresponding reference time/time period values, etc. may be configured to RRC using predefined values or being included in the corresponding reporting configuration. And/or, it may be a value specified by the base station when the base station reports trigger.

For example, if the base station specifies/configures a plurality of reference times (or time period), the UE can perform beam reporting for each time. And/or, the reference time or time period (information) may be a predefined value for the corresponding reporting mode, or a value configured to radio resource control (RRC) as included in the reporting configuration, or a value specified/configured by the base station when reporting and triggering. For example, if the reference time or time period is a value specified/ configured by the base station when reporting and triggering, information about the reference time or information about the time period may be received as included in downlink control information (DCI) for reporting triggering.

And/or, the presence or absence of the beam reporting-related information may be indicated based on a bitmap and/or indicator by each instance for future single/plural time instances/time period configured or indicated by the base station. For example, for a total of four instances, the bitmap of '1001' may be composed of the beam reporting information for the first and fourth instances, and the beam reporting information for the second and third instances may mean the same as the first. In this case, there is an advantage in terms of overhead reduction because the DL RS ID(s)/panel ID and corresponding quality values in specific instance(s) are not reported. This is also applicable to the single/plural valid time period of the second embodiment.

In the above, the study focused on AI/ML beam prediction operation from the UE perspective. Below, AI/ML-based beam prediction and DL RS configuration operations from the base station perspective are examined.

For example, the base station can predict the movement path of the UE through the results of the UE's instantaneous beam reporting, and based on this, the base station may perform beam management for the UE. And/or, the base station can adaptively configure and transmit a subset of the corresponding DL RS IS(s) to improve beam quality performance considering the mobility of the corresponding UE when transmitting DL RS ID(s) to be performed for beam reporting through prediction of UE movement path. For example, the base station can configure DL RS ID#1/#2/#3/#4 to the UE for instance#0, and the base station can receive beam reporting information including quality values for the corresponding DL RS ID(s). And/or, the base station receives beam reporting information, performs movement path prediction for the UE, and if the quality of the corresponding DL RS IDs is expected to deteriorate below a certain threshold, the base station does not transmit/configure the #1/#2/#3/#4 as DL RS IDs for the next beam measurement/beam reporting, but includes the same/different RS ID(s) among the DL RS configured RSs, DL RS candidate(s) can be adaptively applied and transmitted/configured so that the UE can perform beam measurement. Through this, it is possible to maintain beam quality continuously high considering the mobility of the UE.

In the first embodiment, it is described that an operation of reporting including beam information not only for the current instance but also for instances where UE mobility is predicted when beam reporting, and a method of configuring the standard time for each instance when performing the corresponding operation.

In the second embodiment below, it is described a method of reporting/transmitting information about the time when the corresponding beam information is valid with beam information.

### Second embodiment

In the second embodiment, it is described a method of reporting beam information and information on switching time/valid time for each beam/panel.

The methods described below are separated for convenience of explanation, and it goes without saying that the configuration of one method can be replaced with the configuration of another method or applied in combination with each other.

The UE can report the corresponding beam information along with the switching time for each beam/panel to be applied when changing/updating the beam in the above beam reporting. For example, the UE can report/transmit information about the required time when switching to the reported N best beams and each best beam. And/or, the base station may configure/instruct the application time of a specific beam for downlink reception to be after the time required for switching based on the received beam reporting information (or beam information).

And/or, the UE may transmit time information at which the corresponding beam information is valid when reporting beam. For example, time information during which beam information is valid may indicate that beam information is valid from M0 slots/msec to M1 slots/msec or from the reference time to M slots/msec. For example, the UE may report/transmit information about the time when beam information for a plurality of instances and each of the beam information are valid to the base station. For example, the UE may report/transmit information about the valid time of beam information for instance#0, the valid time of beam information for instance#1, and the valid time of beam information for instance#2. And/or, the UE may report/transmit information about the valid time of each of the N beams included in beam information for a specific instance.

And/or, the UE may perform plural beam reporting for plural time period. For example, beam report#0 may consist of time period #0 (e.g. from now to M1 slots/msec), and beam report#1 may consist of time period #1 (e.g. from M1 slots/msec to M2 slots/msec). At this time, single/plural candidate beam information may be included according to each time period. And/or, within the valid time period, it can operate to maintain specific panel(s) applied to beam measurement/reporting or the UE may report beam reporting information including information about the preferred panel(s) for each instance.

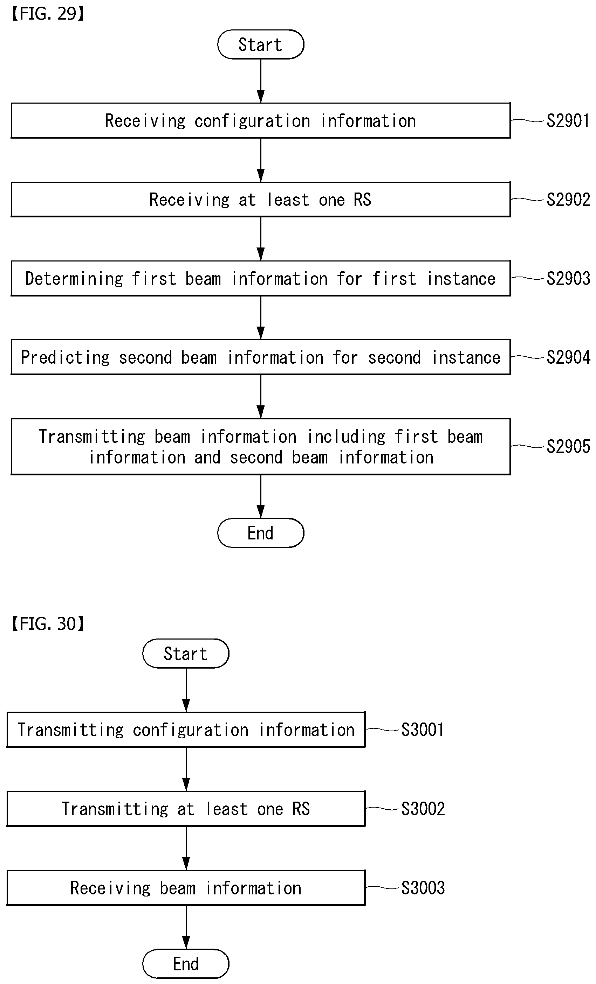

FIG. 29 is a flow chart illustrating an operation method of a UE described in the present disclosure.

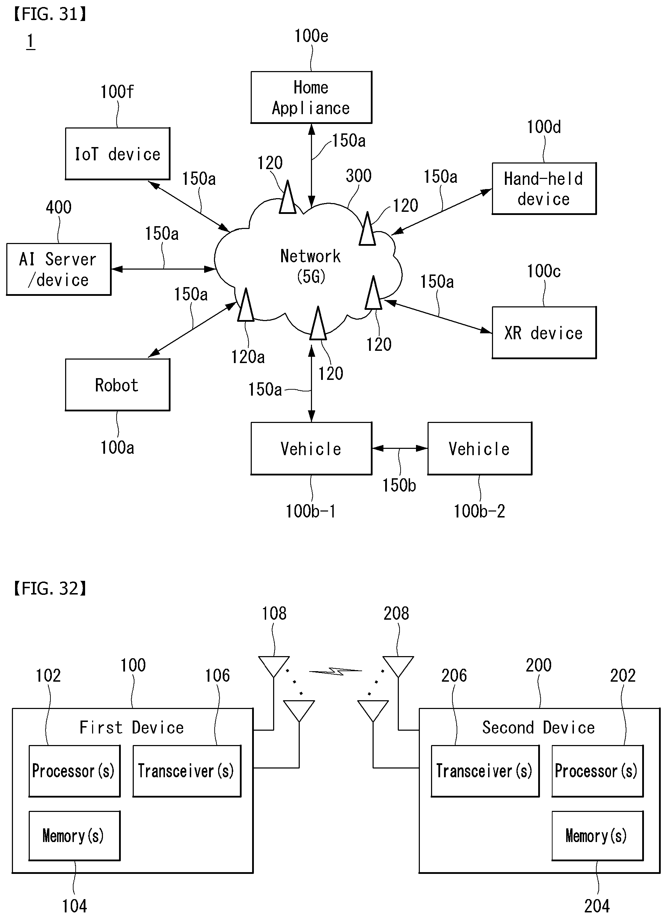

Referring to FIG. 29, first, the UE (100/200 in FIGS. 31 to 34) may receive configuration information about beam information from the base station in step S2901. For example, the configuration information may be the CSI-ResourceConfig IE of Table 5 and/or the NZP CSI-RS resource set IE of FIGS. 12 and 13. For example, the beam management procedure described with reference to FIGS. 8 to 13 may be referred to in the operation method of the UE in FIG. 29.

For example, the operation of receiving configuration information by the UE in step S2901 can be implemented by the device of FIGS. 31 to 34 described above. For example, referring to FIG. 32, one or more processors 102/202 may control one or more memories 104/204 and/or one or more transceivers 106/206, etc. to receive configuration information.

And/or, the UE (100/200 in FIGS. 31 to 34) may receive at least one reference signal (RS) from the base station based on configuration information in step S2902.

For example, the operation of receiving at least one RS by the UE in step S2902 can be implemented by the device of FIGS. 31 to 34 described above. For example, referring to FIG. 32, one or more processors 102/202 may control one or more memories 104/204 and/or one or more transceivers 106/206 to receive at least one RS.

And/or, the UE (100/200 in FIGS. 31 to 34) may determine the first beam information for the first instance based on at least one RS in step S2903.

And/or, RS may be a synchronization signal block (SSB) or a channel state information-reference signal (CSI-RS). For example, each RS may correspond to a specific beam. The contents of the SSB beam and CSI-RS beam in FIG. 9 may be referred to.

And/or, the first beam information may include the one or more RS identifiers (IDs) and quality values for the one or more RS IDs. For example, the RS ID may be a SSB resource indicator (SSBRI) or a CSI-RS resource indicator (CRI). For example, the quality value may be a reference signal received power (RSRP) value or a signal to interference plus noise ratio (SINR) value. For example, the first beam information may include RS IDs corresponding to N (N>=1) best beams and corresponding L1-RSRP values/L1-SINR values.

For example, the first instance may mean a specific time point for measuring beam quality. For example, the first instance may be a reception time point of the at least one RS, a measurement time point of the at least one RS, or a transmission time point of the first beam information. That is, the first beam information for the first instance may mean the first beam information at a specific time point.

For example, the operation of determining the first beam information by the UE in step S2903 can be implemented by the device of FIGS. 31 to 34 described above. For example, referring to FIG. 32, one or more processors 102/202 may control one or more memories 104/204 and/or one or more transceivers 106/206, etc. to determine the first beam information.

And/or, the UE (100/200 in FIGS. 31 to 34) may predict/determine the second beam information for the second instance based on artificial intelligence (AI) in step S2904.

For example, the second instance may refer to a specific time point in the future at which beam quality is to be measured. And/or, the second instance may mean a preconfigured time point after the first instance. For example, the first instance may be a reception time point of at least one RS, a measurement time point of at least one RS, or a transmission time point of first beam information, and the second instance may be a preconfigured time point after the first instance.

For example, AI may include machine learning (ML) and/or deep learning. For example, AI may learn mobility patterns about the UE's location/movement path and time spent in a specific location. For example, AI can learn received RS and/or quality value of RS at the current time and/or location of the UE, and/or a quality value of the RS at the future time and/or location with respect thereto, and/or a movement path (over time) of the UE. And/or, the AI may receive as input the received RS and/or the quality value of the RS at the current time and/or location of the UE, and output a quality value of the RS at a future movement path (over time) and/or at a future time point and/or location. And/or, AI may be used to predict/determine second beam information by learning and/or operating in various ways other than those described above.

And/or, the second beam information may include information about the probability that each of the beams corresponding to one or more RS IDs will be the best beam in the second instance. For example, one or more RS IDs may be the same as one or more RS IDs of the first beam information. For example, if one or more RS IDs are CSI-RS#1, CSI-RS#2, CSI-RS#3, and CSI-RS#4, information about the probability of being the best beam may be {0, 0.5, 0.3 , 0.2}. This may mean that the beam corresponding to CSI-RS#2 has the highest probability of being the best beam in the second instance. For a more detailed description related to this, please refer to the contents of the above-described first embodiment.

And/or, the second beam information may include at least one RS ID predicted/determined in the second instance and a quality value corresponding to the at least one RS ID. For example, at least one RS ID may mean a different RS ID and/or a different number of RS IDs than one or more RS IDs of the first beam information. For a more detailed description related to this, please refer to the contents of the above-described first embodiment.

And/or, the second beam information may be predicted based on the predicted location of the UE in the second instance. That is, the second beam information may include at least one RS ID predicted/determined according to the predicted location/movement path of the UE based on AI in the second instance and a quality value corresponding to the at least one RS ID.

And/or, the second beam information may further include information about the preferred panel in the second instance. For example, the second beam information may include one or more most preferred panel IDs in the second instance predicted/determined based on AI.

And/or, the quality value may be an RSRP value or an SINR value. RS may be SSB or CSI-RS. And/or, the RS ID may be SSBRI or CRI.

For example, the operation of predicting the second beam information by the UE in step S2904 can be implemented by the device of FIGS. 31 to 34 described above. For example, referring to FIG. 32, one or more processors 102/202 may control one or more memories 104/204 and/or one or more transceivers 106/206, etc. to predict the second beam information.

And/or, the UE (100/200 in FIGS. 31 to 34) may transmit beam information including first beam information and second beam information to the base station in step S2905.

And/or, the beam information may further include information about time period in which the beam information is valid. For example, the beam information may include information about the time period in which the first beam information is valid and/or information about the time period in which the second beam information is valid and/or information about the time period in which the beam information is valid. For a more detailed description related to this, please refer to the contents of the above-described second embodiment.

The operation method of the UE in FIG. 29 was explained focusing on the operation of transmitting beam information for the first instance/second instance, but it goes without saying that the operation method of the UE can be applied/extended to the operation of transmitting beam information for two or more instances.

For example, the operation of transmitting beam information by the UE in step S2905 can be implemented by the device of FIGS. 31 to 34 described above. For example, referring to FIG. 32, one or more processors 102/202 may control one or more memories 104/204 and/or one or more transceivers 106/206, etc. to transmit the beam information.

Since the operation of the UE described with reference to FIG. 29 is the same as the operation of the UE described with reference to FIGS. 1 to 28 (e.g. the first to second embodiments), detailed descriptions other than this will be omitted.

The operation method of the UE described with reference to FIG. 29 may be applied in combination with the proposed methods of the first and second embodiments or may be applied as an alternative. And/or, the operation method of the UE in FIG. 29 can be supplemented by the proposed methods of the first and second embodiments.

The signaling and operations described above may be implemented by devices to be described below (e.g. FIGS. 31 to 34). For example, the signaling and operations described above may be processed by one or more processors of FIGS. 31 to 34, and the signaling and operations described above may be stored in memory in the form of instructions/programs (e.g. instructions, executable code) for driving at least one processor of FIGS. 31 to 34.

For example, a processing apparatus configured to control a user equipment (UE) to transmit beam information in a wireless communication system, the processing apparatus may comprise at least one processor, and at least one memory operably connected to the at least one processor, and storing instructions for performing operations based on being executed by the at least one processor, wherein the operations may include receiving configuration information about the beam information from a base station, receiving at least one reference signal (RS) from the base station based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and transmitting the beam information including the first beam information and the second beam information to the base station.

For example, a computer-readable storage medium storing at least one instruction, wherein the least one instruction causes at least one processor to control operations based on being executed by the at least one processor in the present disclosure, wherein the operations may include receiving configuration information about the beam information from a base station, receiving at least one reference signal (RS) from the base station based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and transmitting the beam information including the first beam information and the second beam information to the base station.

FIG. 30 is a flowchart illustrating an operation method of a base station described in the present disclosure.

Referring to FIG. 30, first, the base station (100/200 in FIGS. 31 to 34) may transmit configuration information about beam information to the UE in step S3001. For example, the configuration information may be the CSI-ResourceConfig IE of Table 5 and/or the NZP CSI-RS resource set IE of FIGS. 12 and 13. For example, the beam management procedure described with reference to FIGS. 8 to 13 may be referred to in the operation method of the base station in FIG. 30.

For example, the operation of transmitting configuration information by the base station in step S3001 can be implemented by the device of FIGS. 31 to 34 described above. For example, referring to FIG. 32, one or more processors 102/202 may control one or more memories 104/204 and/or one or more transceivers 106/206, etc. to transmit the configuration information.

And/or, the base station (100/200 in FIGS. 31 to 34) may transmit at least one reference signal (RS) to the UE based on the configuration information in step S3002.

For example, the operation of transmitting at least one RS by the base station in step S3002 can be implemented by the device of FIGS. 31 to 34 described above. For example, referring to FIG. 32, one or more processors 102/202 may control one or more memories 104/204 and/or one or more transceivers 106/206, etc. to transmit the at least one RS.

And/or, the first beam information for the first instance may be determined based on at least one RS. And/or, RS may be a synchronization signal block (SSB) or a channel state information-reference signal (CSI-RS). For example, each RS may correspond to a specific beam. The contents of the SSB beam and CSI-RS beam in FIG. 9 may be referred to.

And/or, the first beam information may include one or more RS identifiers (IDs) and quality values for one or more RS IDs. For example, the RS ID may be a SSB resource indicator (SSBRI) or a CSI-RS resource indicator (CRI). For example, the quality value may be a reference signal received power (RSRP) value or a signal to interference plus noise ratio (SINR) value. For example, the first beam information may include RS IDs corresponding to N (N>=1) best beams and corresponding L1-RSRP values/L1-SINR values.

For example, the first instance may mean a specific time point for measuring beam quality. For example, the first instance may be a reception time point of at least one RS, a measurement time point of at least one RS, or a transmission time point of first beam information. That is, the first beam information for the first instance may mean the first beam information at a specific time point.

And/or, the second beam information for the second instance may be predicted/determined based on artificial intelligence (AI).

For example, the second instance may refer to a specific time point in the future at which beam quality is to be measured. And/or, it may mean a preconfigured time point after the first instance. For example, the first instance may be a reception time point of at least one RS, a measurement time point of at least one RS, or a transmission time point of first beam information, and the second instance may be a preconfigured time point after the first instance.

For example, AI may include machine learning (ML) and/or deep learning. For example, AI may learn mobility patterns about the location/movement path of the UE and time spent in a specific location. For example, AI can learn received RS and/or quality value of RS at the current time and/or location of the UE, and/or a quality value of the RS at the future time and/or location with respect thereto, and/or a movement path (over time) of the UE. And/or, the AI may receive as input the received RS and/or the quality value of the RS at the current time and/or location of the UE, and output a quality value of the RS at a future travel path (over time) and/or at a future time point and/or location. And/or, AI may be used to predict/determine second beam information by learning and/or operating in various ways other than those described above.

And/or, the second beam information may include information about the probability that each of the beams corresponding to one or more RS IDs will be the best beam in the second instance. For example, one or more RS IDs may be the same as one or more RS IDs of the first beam information. For example, if one or more RS IDs are CSI-RS#1, CSI-RS#2, CSI-RS#3, and CSI-RS#4, information about the probability of being the best beam may be {0, 0.5, 0.3 , 0.2}. This may mean that the beam corresponding to CSI-RS#2 has the highest probability of being the best beam in the second instance. For a more detailed description related to this, please refer to the contents of the above-described first embodiment.

And/or, the second beam information may include at least one RS ID predicted/determined in the second instance and a quality value corresponding to the at least one RS ID. For example, at least one RS ID may mean a different RS ID and/or a different number of RS IDs than one or more RS IDs of the first beam information. For a more detailed description related to this, please refer to the contents of the above-described first embodiment.

And/or, the second beam information may be predicted based on the predicted location of the UE in the second instance. That is, the second beam information may include at least one RS ID predicted/determined according to the predicted location/movement path of the UE based on AI in the second instance and a quality value corresponding to the at least one RS ID.

And/or, the second beam information may further include information about the preferred panel in the second instance. For example, the second beam information may include one or more most preferred panel IDs in the second instance predicted/determined based on AI.

And/or, the quality value may be an RSRP value or an SINR value. RS may be SSB or CSI-RS. And/or, the RS ID may be SSBRI or CRI.

And/or, the base station (100/200 in FIGS. 31 to 34) may receive beam information including first beam information and second beam information from the UE in step S3003.

And/or, the beam information may further include information about time period in which the beam information is valid. For example, the beam information may include information about the time period in which the first beam information is valid and/or information about the time period in which the second beam information is valid and/or information about the time period in which the beam information is valid. For a more detailed description related to this, please refer to the contents of the above-described second embodiment.

The operation method of the base station in FIG. 30 was explained focusing on the operation of transmitting beam information for the first instance/second instance, but it goes without saying that the operation method of the UE can be applied/extended to the operation of transmitting beam information for two or more instances.

For example, the operation of receiving beam information by the base station in step S3003 can be implemented by the device of FIGS. 31 to 34 described above. For example, referring to FIG. 32, one or more processors 102/202 may control one or more memories 104/204 and/or one or more transceivers 106/206, etc. to receive the beam information.

Since the operation of the base station described with reference to FIG. 30 is the same as the operation of the base station described with reference to FIGS. 1 to 29 (e.g. the first to second embodiments), detailed descriptions other than this will be omitted.

The operation method of the base station described with reference to FIG. 30 may be applied in combination with the proposed methods of the first and second embodiments or may be applied instead. And/or, the operation method of the base station in FIG. 30 can be supplemented by the proposed methods of the first and second embodiments.

The signaling and operations described above may be implemented by devices to be described below (e.g. FIGS. 31 to 34). For example, the signaling and operations described above may be processed by one or more processors of FIGS. 31 to 34, and the signaling and operations described above may be stored in memory in the form of instructions/programs (e.g. instructions, executable code) for driving at least one processor of FIGS. 31 to 34.

For example, a processing apparatus configured to control a base station to receive beam information in a wireless communication system, the processing apparatus may comprise at least one processor, and at least one memory operably connected to the at least one processor, and storing instructions for performing operations based on being executed by the at least one processor, wherein the operations may include transmitting configuration information about the beam information to a user equipment (UE), transmitting at least one reference signal (RS) to the UE based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and receiving the beam information including the first beam information and the second beam information from the UE.

For example, a computer-readable storage medium storing at least one instruction, wherein the least one instruction causes at least one processor to control operations based on being executed by the at least one processor in the present disclosure, wherein the operations may include transmitting configuration information about the beam information to a user equipment (UE), transmitting at least one reference signal (RS) to the UE based on the configuration information, determining first beam information for a first instance based on the at least one RS, wherein the first beam information includes one or more RS identifiers (IDs) and quality values for the one or more RS IDs, predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID, and receiving the beam information including the first beam information and the second beam information from the UE.

### Example of communication system to which the present disclosure is applied

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 31 shows a communication system 1 based on an embodiment of the present disclosure.

Referring to FIG. 31, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Example of wireless device to which the present disclosure is applied

FIG. 32 illustrates wireless devices based on an embodiment of the present disclosure.

Referring to FIG. 32, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) based on the descriptions, functions, procedures, proposals, methods, and/or operational flowcharts disclosed in this document. The one or more processors 102 and 202 may generate messages, control information, data, or information based on the descriptions, functions, procedures, proposals, methods, and/or operational flowcharts disclosed in this document. The one or more processors 102 and 202 may generate signals (e.g., baseband signals) including PDUs, SDUs, messages, control information, data, or information based on the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information based on the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Application example of wireless device to which the present disclosure is applied

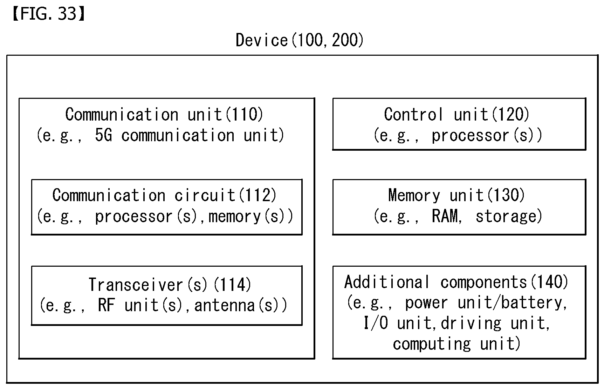

FIG. 33 illustrates another example of a wireless device based on an embodiment of the present disclosure. The wireless device may be implemented in various forms based on a use-case/service.

Referring to FIG. 33, wireless devices 100 and 200 may correspond to the wireless devices 100 and 200 of FIG. 32 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 32. For example, the transceiver(s) 114 may include the one or more transceivers 106 and 206 and/or the one or more antennas 108 and 208 of FIG. 32. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured based on types of wireless devices. For example, the additional components 140 may include at least one of a power unit/battery, input/output (I/O) unit, a driving unit, and a computing unit. The wireless device may be implemented in the form of, without being limited to, the robot (100a of FIG. 31), the vehicles (100b-1 and 100b-2 of FIG. 31), the XR device (100c of FIG. 31), the hand-held device (100d of FIG. 31), the home appliance (100e of FIG. 31), the IoT device (100f of FIG. 31), a digital broadcast terminal, a hologram device, a public safety device, an MTC device, a medicine device, a fintech device (or a finance device), a security device, a climate/environment device, the AI server/device (400 of FIG. 31), the BSs (200 of FIG. 31), a network node, etc. The wireless device may be used in a mobile or fixed place based on a use-example/service.

In FIG. 33, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Example of mobile device to which the present disclosure is applied

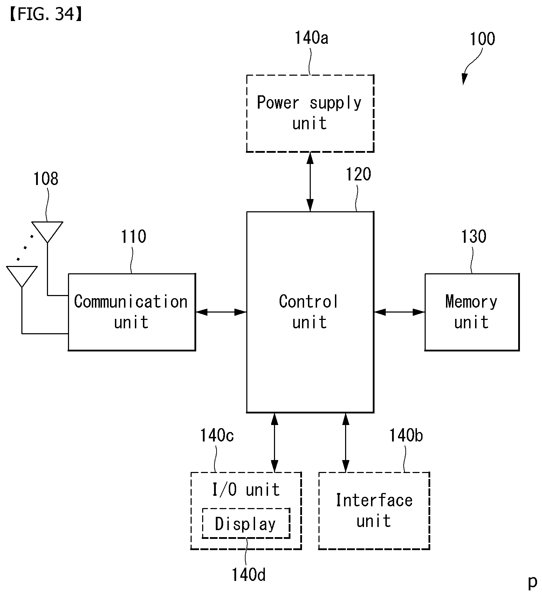

FIG. 34 shows a hand-held device based on an embodiment of the present disclosure. The hand-held device may include a smartphone, a smart pad, a wearable device (e.g., a smart watch or a smart glasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 34, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 33, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

A wireless communication technology implemented by a wireless device (e.g., 100, 200) according to the present disclosure may include narrowband Internet of Things for low power communication in addition to LTE, NR and 6G. In this case, for example, the NB-IoT technology may be an example of a low power wide area network (LPWAN) technology and may be implemented by standards such as LTE Cat NB1 and/or LTE Cat NB2, and the present disclosure is not limited to the aforementioned names. Additionally or alternatively, the wireless communication technology implemented by the wireless device (e.g., 100, 200) according to the present disclosure may perform communication based on the LTE-M technology. In this case, for example, the LTE-M technology may be an example of the LPWAN technology and may be called various names, such as enhanced Machine Type Communication (eMTC). For example, the LTE-M technology may be implemented by at least one of various standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and the present disclosure is not limited to the aforementioned names. Additionally or alternatively, the wireless communication technology implemented by the wireless device (e.g., 100, 200) according to the present disclosure may include at least one of ZigBee, Bluetooth and a low power wide area network (LPWAN) in which low power communication is considered, and the present disclosure is not limited to the aforementioned names. For example, the ZigBee technology may generate personal area networks (PAN) related to small/low-power digital communication based on various standards such as IEEE 802.15.4, and may be called various names.

The embodiments described above are implemented by combinations of components and features of the present disclosure in predetermined forms. Each component or feature should be considered selectively unless specified separately. Each component or feature can be carried out without being combined with another component or feature. Moreover, some components and/or features are combined with each other and can implement embodiments of the present disclosure. The order of operations described in embodiments of the present disclosure can be changed. Some components or features of one embodiment may be included in another embodiment, or may be replaced by corresponding components or features of another embodiment. It is apparent that some claims referring to specific claims may be combined with another claims referring to the claims other than the specific claims to constitute the embodiment or add new claims by means of amendment after the application is filed.

Embodiments of the present disclosure can be implemented by various means, for example, hardware, firmware, software, or combinations thereof. When embodiments are implemented by hardware, one embodiment of the present disclosure can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the present disclosure can be implemented by modules, procedures, functions, etc. performing functions or operations described above. Software code can be stored in a memory and can be driven by a processor. The memory is provided inside or outside the processor and can exchange data with the processor by various well-known means.

It is apparent to those skilled in the art that the present disclosure can be embodied in other specific forms without departing from essential features of the present disclosure. Accordingly, the above detailed description should not be construed as limiting in all aspects and should be considered as illustrative. The scope of the present disclosure should be determined by rational construing of the appended claims, and all modifications within an equivalent scope of the present disclosure are included in the scope of the present disclosure.

### [Industrial Applicability]

Although a method of transmitting and receiving a PDCCH in a wireless communication system according to the present disclosure has been described focusing on examples applying to the 3GPP LTE/LTE-A system and 5G system (new RAT system), the present disclosure can be applied to various wireless communication systems, such as beyond 5G, 6G, and beyond 6G, in addition to the systems described above.

Advantageous aspects of the present disclosure may be summarized as follows:
Aspect 1. A method for transmitting beam information in a wireless communication system, the method performed by a user equipment (UE) comprising:
   receiving configuration information about the beam information from a base station;
   receiving at least one reference signal (RS) from the base station based on the configuration information;
   determining first beam information for a first instance based on the at least one RS, wherein the first beam information includes one or more RS identifiers (IDs) and quality values for the one or more RS IDs;
   predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID; and
   transmitting the beam information including the first beam information and the second beam information to the base station.
Aspect 2. The method of aspect 1, wherein the first instance is a reception time point of the at least one RS, a measurement time point of the at least one RS, or a transmission time point of the first beam information, and
   the second instance is a preconfigured time point after the first instance.
Aspect 3. The method of aspect 1, wherein the second beam information is predicted based on a predicted position of the UE in the second instance.
Aspect 4. The method of aspect 1, wherein the second beam information further includes information about a preferred panel in the second instance.
Aspect 5. The method of aspect 1, wherein the quality value is a reference signal received power (RSRP) value or a signal to interference plus noise ratio (SINR) value.
Aspect 6. The method of aspect 1, wherein the RS is a synchronization signal block (SSB) or a channel state information-reference signal (CSI-RS).
Aspect 7. The method of aspect 1, wherein the RS ID is a SSB resource indicator (SSBRI) or a CSI-RS resource indicator (CRI).
Aspect 8. The method of aspect 1, wherein the beam information further includes information about a time period in which the beam information is valid.
Aspect 9. A user equipment (UE) configured to transmit beam information in a wireless communication system, the UE comprising:
   at least one transceiver;
   at least one processor; and
   at least one memory operably connected to the at least one processor, and storing instructions for performing operations based on being executed by the at least one processor,
   wherein the operations includes:
      receiving configuration information about the beam information from a base station;
      receiving at least one reference signal (RS) from the base station based on the configuration information;
      determining first beam information for a first instance based on the at least one RS, wherein the first beam information includes one or more RS identifiers (IDs) and quality values for the one or more RS IDs;
      predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID; and
      transmitting the beam information including the first beam information and the second beam information to the base station.
Aspect 10. A method for receiving beam information in a wireless communication system, the method performed by a base station comprising:
   transmitting configuration information about the beam information to a user equipment (UE);
   transmitting at least one reference signal (RS) to the UE based on the configuration information,
   determining first beam information for a first instance based on the at least one RS, wherein the first beam information includes one or more RS identifiers (IDs) and quality values for the one or more RS IDs;
   predicting second beam information for a second instance based on artificial intelligence (AI),
   wherein the second beam information includes information about probability that each of beams corresponding to the one or more RS IDs becomes the best beam in the second instance or a quality value corresponding to at least one RS ID predicted in the second instance and the at least one RS ID; and
   receiving the beam information including the first beam information and the second beam information from the UE.
Aspect 11. The method of aspect 10, wherein the first instance is a reception time point of the at least one RS, a measurement time point of the at least one RS, or a transmission time point of the first beam information, and
   the second instance is a preconfigured time point after the first instance.
Aspect 12. The method of aspect 10, wherein the second beam information is predicted based on a predicted position of the UE in the second instance.
Aspect 13. The method of aspect 10, wherein the second beam information further includes information about a preferred panel in the second instance.
Aspect 14. The method of aspect 10, wherein the quality value is a reference signal received power (RSRP) value or a signal to interference plus noise ratio (SINR) value.
Aspect 15. The method of aspect 10, wherein the RS is a synchronization signal block (SSB) or a channel state information-reference signal (CSI-RS).
Aspect 16. The method of aspect 10, wherein the RS ID is a SSB resource indicator (SSBRI) or a CSI-RS resource indicator (CRI).
Aspect 17. The method of aspect 10, wherein the beam information further includes information about a time period in which the beam information is valid.
Aspect 18. A base station configured to receive beam information in a wireless communication system, the base station comprising:
   at least one transceiver;
   at least one processor; and
   at least one memory operably connected to the at least one processor, and storing instructions for performing operations based on being executed by the at least one processor,
   wherein the operations includes:
      transmitting configuration information about the beam information to a user equipment (UE);
      transmitting at least one reference signal (RS) to the UE based on the configuration information,
      determining first beam information for a first instance based on the at least one RS, wherein the first beam information includes one or more RS identifiers (IDs) and quality values for the one or more RS IDs;
      predicting second beam information for a second instance based on artificial intelligence (AI),
      wherein the second beam information includes information about probability that each of beams corresponding to the one or more RS IDs becomes the best beam in the second instance or a quality value corresponding to at least one RS ID predicted in the second instance and the at least one RS ID; and
      receiving the beam information including the first beam information and the second beam information from the UE.
Asepect 19. A processing apparatus configured to control a user equipment (UE) to transmit beam information in a wireless communication system, the processing apparatus comprising:
   at least one processor; and
   at least one memory operably connected to the at least one processor, and storing instructions for performing operations based on being executed by the at least one processor,
   wherein the operations includes:
      receiving configuration information about the beam information from a base station;
      receiving at least one reference signal (RS) from the base station based on the configuration information;
      determining first beam information for a first instance based on the at least one RS, wherein the first beam information includes one or more RS identifiers (IDs) and quality values for the one or more RS IDs;
      predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID; and
      transmitting the beam information including the first beam information and the second beam information to the base station.
Aspect 20. A computer-readable storage medium storing at least one instruction, wherein the least one instruction causes at least one processor to control operations based on being executed by the at least one processor,
   wherein the operations includes:
   receiving configuration information about the beam information from a base station;
   receiving at least one reference signal (RS) from the base station based on the configuration information;
   determining first beam information for a first instance based on the at least one RS, wherein the first beam information includes one or more RS identifiers (IDs) and quality values for the one or more RS IDs;
   predicting second beam information for a second instance based on artificial intelligence (AI), wherein the second beam information includes information about probability that each of beams corresponding to the one or more RS IDs becomes the best beam in the second instance or a quality value corresponding to at least one RS ID predicted in the second instance and the at least one RS ID; and
   transmitting the beam information including the first beam information and the second beam information to the base station.

## Claims

1. A method performed by a user equipment, UE, the method comprising:
receiving, from a base station, BS, channel state information, CSI, report configuration information, wherein the CSI report configuration information includes information indicating a number of one or more future time instances for which prediction is to be reported and time interval information associated with a reference time;
measuring layer 1 reference signal received power, L1-RSRP, for one or more channel state information-reference signal, CSI-RS, resources or synchronization signal block, SSB, resources;
determining, based on measurements of the L1-RSRP, one or more predicted CSI-RS resource indicators, predicted CRIs, or predicted SSB resource indicators, predicted SSBRIs, for each of the one or more future time instances; and
transmitting, to the BS, a CSI report including the one or more predicted CRIs or predicted SSBRIs determined for each of the one or more future time instances,
wherein the reference time is determined based on a reception time point of the CSI-RS resource or the SSB resource, and
wherein the time interval information indicates a time interval between the reference time and an earliest future time instance among the one or more future time instances.

2. The method of claim 1,
wherein the CSI report further includes, for each of the one or more future time instances, one or more predicted L1-RSRP values corresponding to the one or more predicted CRIs or predicted SSBRIs.

3. The method of claim 1,
wherein the determining of the one or more predicted CRIs or predicted SSBRIs is performed based on artificial intelligence, AI, or machine learning, ML.

4. The method of claim 1,
wherein the one or more predicted CRIs or predicted SSBRIs are determined based on a predicted location or a predicted movement path of the UE for the one or more future time instances.

5. The method of claim 2,
wherein the one or more future time instances include a plurality of future time instances, and
wherein a predicted L1-RSRP value corresponding to at least one future time instance among the plurality of future time instances is included in the CSI report as a differential value relative to an L1-RSRP value corresponding to another future time instance among the plurality of future time instances.

6. A method performed by a base station, BS, the method comprising:
transmitting, to a user equipment, UE, channel state information, CSI, report configuration information, wherein the CSI report configuration information includes information indicating a number of one or more future time instances for which prediction is to be reported and time interval information associated with a reference time;
transmitting, to the UE, one or more reference signals, RSs, corresponding to one or more channel state information-reference signal, CSI-RS, resources or synchronization signal block, SSB, resources; and
receiving, from the UE, a CSI report including one or more predicted CSI-RS resource indicators, predicted CRIs, or predicted SSB resource indicators, predicted SSBRIs, determined by the UE, based on measurements of layer 1 reference signal received power, L1-RSRP, for the one or more CSI-RS resources or SSB resources, for each of the one or more future time instances,
wherein the reference time is determined based on a reception time point, by the UE, of the CSI-RS resource or the SSB resource, and
wherein the time interval information indicates a time interval between the reference time and an earliest future time instance among the one or more future time instances.

7. The method of claim 6,
wherein the CSI report further includes, for each of the one or more future time instances, one or more predicted L1-RSRP values corresponding to the one or more predicted CRIs or predicted SSBRIs.

8. The method of claim 6,
wherein the one or more predicted CRIs or predicted SSBRIs included in the CSI report are determined by the UE based on artificial intelligence, AI, or machine learning, ML.

9. The method of claim 6,
wherein the one or more predicted CRIs or predicted SSBRIs included in the CSI report are determined by the UE based on a predicted location or a predicted movement path of the UE for the one or more future time instances.

10. The method of claim 7,
wherein the one or more future time instances include a plurality of future time instances, and
wherein a predicted L1-RSRP value corresponding to at least one future time instance among the plurality of future time instances is included in the CSI report as a differential value relative to an L1-RSRP value corresponding to another future time instance among the plurality of future time instances.

11. A user equipment, UE, comprising:
at least one transceiver;
at least one processor; and
at least one memory operably connected to the at least one processor and storing instructions that, when executed by the at least one processor, cause the UE to perform the method according to any one of claims 1 to 5.

12. A base station, BS, comprising:
at least one transceiver;
at least one processor; and
at least one memory operably connected to the at least one processor and storing instructions that, when executed by the at least one processor, cause the BS to perform the method according to any one of claims 6 to 10.
